(19) Europäisches Patentamt
European Patent Office
Office européen des brevets

(11) EP 2 593 750 B1

(12) EUROPEAN PATENT SPECIFICATION

(45) Date of publication and mention
of the grant of the patent:
**17.07.2019 Bulletin 2019/29**

(51) Int Cl.:
**G01C 21/34** (2006.01)

(21) Application number: **11807482.2**

(22) Date of filing: **13.07.2011**

(86) International application number:
**PCT/US2011/043917**

(87) International publication number:
**WO 2012/009479 (19.01.2012 Gazette 2012/03)**

(54) **NAVIGATION SYSTEM WITH ECOLOGICAL ROUTE BASED DESTINATION GUIDANCE MECHANISM AND METHOD OF OPERATION THEREOF**

NAVIGATIONSSYSTEM MIT UMWELTFREUNDLICHEM ZIELFÜHRUNGSMECHANISMUS UND BETRIEBSVERFAHREN DAFÜR

SYSTÈME DE NAVIGATION AYANT UN MÉCANISME DE GUIDAGE DE DESTINATION SUR BASE D'ITINÉRAIRE ÉCOLOGIQUE ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.07.2010 US 364010 P**

(43) Date of publication of application:
**22.05.2013 Bulletin 2013/21**

(73) Proprietor: **TeleNav, Inc.**
**Sunnyvale, CA 94086 (US)**

(72) Inventors:
• **HUANG, Jie**
**Milpitas**
**California 95035 (US)**
• **CHAO, Yi-Chung**
**San Jose**
**California 95129 (US)**

(74) Representative: **Liesegang, Eva**
**Boehmert & Boehmert**
**Anwaltspartnerschaft mbB**
**Pettenkoferstrasse 22**
**80336 München (DE)**

(56) References cited:
EP-A1- 2 520 901          DE-A1-102007 059 120
DE-A1-102008 002 695      DE-A1-102010 062 252
JP-A- H02 278 116         JP-A- H10 197 272
US-A- 5 568 390           US-A- 5 742 922
US-A1- 2008 091 309       US-A1- 2009 109 022
US-A1- 2009 164 114       US-A1- 2010 049 397
US-B1- 7 493 209

## Description

### CROSS-REFERENCE TO RELATED APPLICATION(S)

This application claims the benefit of U.S. Provisional Patent Application serial number 61/364,010 filed July 13, 2010, and the subject matter thereof is incorporated herein by reference thereto.

### TECHNICAL FIELD

The present invention relates generally to a navigation system, and more particularly to a system for destinations.

### BACKGROUND ART

Modern portable consumer and industrial electronics, especially client devices such as navigation systems, cellular phones, portable digital assistants, and combination devices, are providing increasing levels of functionality to support modern life including location-based information services. Numerous technologies have been developed to utilize this new functionality. Some of the research and development strategies focus on new technologies while others focus on improving the existing and mature technologies. Research and development in the existing technologies can take a myriad of different directions.

As users become more empowered with the growth of mobile location based service devices, new and old paradigms begin to take advantage of this new device space. There are many technological solutions to take advantage of this new device location opportunity. One existing approach is to use location information to provide navigation services such as a global positioning system (GPS) for a car or on a mobile device such as a cell phone, portable navigation device (PND) or a personal digital assistant (PDA).

Location based services allow users to create, transfer, store, and/or consume information in order for users to create, transfer, store, and consume in the "real world". One such use of location based services is to efficiently transfer or route users to the desired destination or service.

Navigation systems and location based services enabled systems have been incorporated in automobiles, notebooks, handheld devices, and other portable products. Today, these systems aid users by incorporating available, real-time relevant information, such as maps, directions, local businesses, or other points of interest (POI). The real-time information provides invaluable relevant information.

In addition, rapid fluctuations in fuel prices have become a paramount concern for consumers. Current navigation systems can generate routes for shortest distance and fastest time but do not take fuel efficiency, environmental concerns, and fuel costs into account. The advancements with navigation system need to incorporate these growing concerns.

US5742922A refers to selecting a route for vehicle travel according to fuel consumption. The respective method includes the steps of determining the current vehicle position based on signals received from satellites, determining routes from the current position to a destination, and selecting from the routes the preferred route requiring the least amount of fuel consumption. For this purpose, for each of the determined routes, altitude information for intervals along the route are determined to calculate the vehicle fuel consumption required for climbing or descending along the route. Moreover, signals related to the traffic situation are received from a traffic authority and used for determining the traffic situation for each of the routes between the current position and the destination. Then, the particular altitude differences and the traffic situation of each respective path are used for calculating the fuel consumption the vehicle would require to travel along each of the paths, and to compare the required fuel consumptions of the different routes.

DE102007059120A1 refers to determining a route by considering the total energy required to travel the route. This is achieved by assigning acceleration-dependent components to segments of a road network map such as to consider acceleration processes which are likely to affect the fuel consumption when driving the route. Particular nodes of the map data are assigned to intersections, highway entrances, road sections with changing speed limits, and to road segments subject to traffic congestion. The document also mentions that the vehicle may consume fuel in the idle state, for example when waiting at road intersections.

DE102008002695A1 refers to determining a route from a starting point to a destination point for a motor vehicle, where not only the energy consumption and/or pollutant emissions produced while driving along route segments are taken into account, but also an energy consumption and/or pollutant emissions resulting from vehicle standstills. In this respect, energy consumption from vehicle standstills are described by a factor statistically determined from previous standstill times which occurred during past trips. More specifically, previous standstill durations are determined in relation to locations and situations of the vehicle. For example, a determination is made as to whether the standstill occurs at an intersection while driving in a straight trajectory or, instead, upon making a left turn. This is based on the understanding that a left turn may involve a longer standstill than a standstill while continuing to drive in a straight trajectory, due to the need to cross a line of oncoming traffic. A previous left turn may be detected by an activated turn signal. Furthermore, the specific energy consumption is determined during the standstills, so that absolute values for energy consumption may be determined from the waiting time. These collected data are evaluated using statistical methods and stored, and thus remain available for calculating a new route.

Thus, a need still remains for a navigation system that can create custom routes to a destination that can maximize fuel efficiency and minimize fuel consumption. In view of the ever-increasing commercial competitive pressures, along with growing consumer expectations and the diminishing opportunities for meaningful product differentiation in the marketplace, it is critical that answers be found for these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

DISCLOSURE OF THE INVENTION

The present invention provides a method of operation of a navigation system according to Claim 1.

The present invention provides a navigation system according to Claim 5.

Certain embodiments of the invention have other steps or elements in addition to those mentioned above. The steps or elements will become apparent to those skilled in the art from a reading of the following detailed description when taken with reference to the accompanying drawings.

BRIEF DESCRIPTION OF THE DRAWINGS

FIG. 1 is a navigation system with ecological route based destination guidance mechanism in an embodiment of the present invention.

FIG. 2 is an example of a display interface of the first device.

FIG. 3 is an example of one of the candidate routes of FIG. 2.

FIG. 4 is an exemplary block diagram of the navigation system.

FIG. 5 is a control flow of the navigation system.

FIG. 6 is a detailed view of the route generation module.

FIG. 7 is a detailed view of the route travel cost module.

FIG. 8 is an example of a first example chart and a second example chart of the consumption rate chart.

FIG. 9 is a detailed view of the route acceleration module.

FIG. 10 is an example of the stop probability table.

FIG. 11 is an example of the turn speed table.

FIG. 12 is a detailed view of the route idle module.

FIG. 13 is an example of the average idle turn chart.

FIG. 14 is an example of the idle probability table.

FIG. 15 is a flow chart of a method of operation of the navigation system in a further embodiment of the present invention.

BEST MODE FOR CARRYING OUT THE INVENTION

The following embodiments are described in sufficient detail to enable those skilled in the art to make and use the invention. It is to be understood that other embodiments would be evident based on the present disclosure, and that system, process, or mechanical changes may be made without departing from the scope of the present invention.

In the following description, numerous specific details are given to provide a thorough understanding of the invention. However, it will be apparent that the invention may be practiced without these specific details. In order to avoid obscuring the present invention, some well-known circuits, system configurations, and process steps are not disclosed in detail.

The drawings showing embodiments of the system are semi-diagrammatic and not to scale and, particularly, some of the dimensions are for the clarity of presentation and are shown exaggerated in the drawing FIGs. Similarly, although the views in the drawings for ease of description generally show similar orientations, this depiction in the FIGs. is arbitrary for the most part. Generally, the invention can be operated in any orientation.

Where multiple embodiments are disclosed and described having some features in common, for clarity and ease of illustration, description, and comprehension thereof, similar and like features one to another will ordinarily be described with similar reference numerals. The embodiments have been numbered first embodiment, second embodiment, etc. as a matter of descriptive convenience and are not intended to have any other significance or provide limitations for the present invention.

One skilled in the art would appreciate that the format with which navigation information is expressed is not critical to some embodiments of the invention. For example, in some embodiments, navigation information is presented in the format of (X, Y), where X and Y are two ordinates that define the geographic location, i.e., a position of a user.

The navigation information is presented by longitude and latitude related information. The navigation information also includes a velocity element including a speed component and a direction component.

The term "navigation routing information" referred to herein is defined as the routing information described as well as information relating to points of interest to the user, such as local business, hours of businesses, types of businesses, advertised specials, traffic information, maps, local events, and nearby community or personal information.

The term "module" referred to herein includes software, hardware, or a combination thereof. For example, the software can be machine code, firmware, embedded code, and application software. Also for example, the hardware can be circuitry, processor, computer, integrated circuit, integrated circuit cores, or a combination thereof.

The term "fuel" referred to herein can include gasoline, diesel, bio-diesel, ethanol, electric power, hydrogen fuel-cell, or a combination thereof, as examples. The term "fuel efficiency" referred to herein is the measure of a distance unit per a volume unit. A distance unit can include miles or kilometers. A volume unit can include gallons or liters. The term "fuel consumption" referred to herein is the actual volume of fuel used.

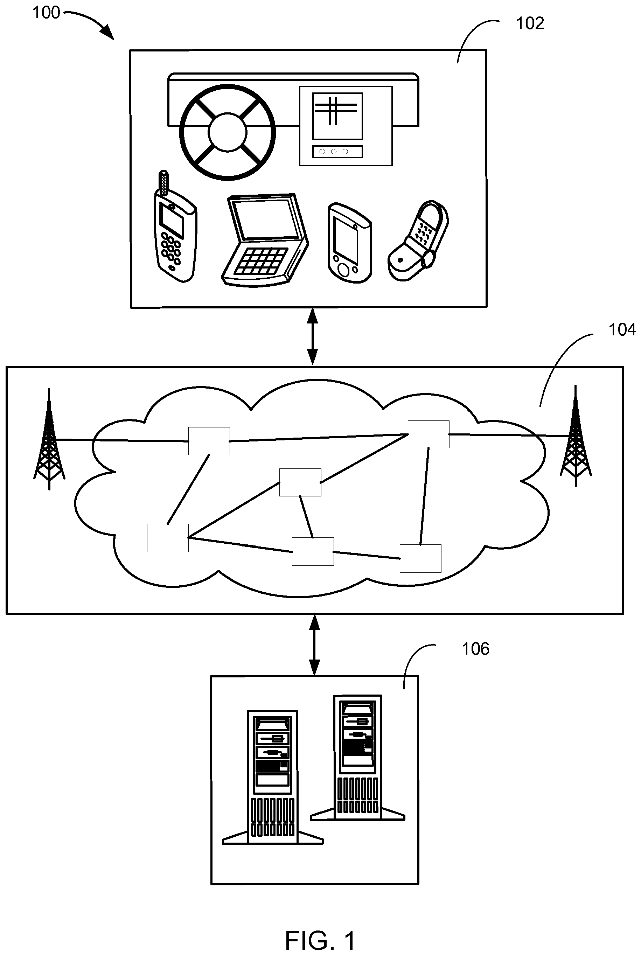

Referring now to FIG. 1, therein is shown a navigation system 100 with ecological route based destination guidance mechanism in an embodiment of the present invention. The navigation system 100 includes a first device 102, such as a client or a server, connected to a second device 106, such as a client or server, with a communication path 104, such as a wireless or wired network.

For example, the first device 102 can be of any of a variety of mobile devices, such as a cellular phone, personal digital assistant, a notebook computer, automotive telematic navigation system, or other multi-functional mobile communication or entertainment device. The first device 102 can be a standalone device, or can be incorporated with a vehicle, for example a car, truck, bus, or train. The first device 102 can couple to the communication path 104 to communicate with the second device 106.

For illustrative purposes, the navigation system 100 is described with the first device 102 as a mobile computing device, although it is understood that the first device 102 can be different types of computing devices. For example, the first device 102 can also be a non-mobile computing device, such as a server, a server farm, or a desktop computer.

The second device 106 can be any of a variety of centralized or decentralized computing devices. For example, the second device 106 can be a computer, grid computing resources, a virtualized computer resource, cloud computing resource, routers, switches, peer-to-peer distributed computing devices, or a combination thereof.

The second device 106 can be centralized in a single computer room, distributed across different rooms, distributed across different geographical locations, embedded within a telecommunications network. The second device 106 can have a means for coupling with the communication path 104 to communicate with the first device 102. The second device 106 can also be a client type device as described for the first device 102.

In another example, the first device 102 can be a particularized machine, such as a mainframe, a server, a cluster server, rack mounted server, or a blade server, or as more specific examples, an IBM System z10 (TM) Business Class mainframe or a HP ProLiant ML (TM) server. Yet another example, the second device 106 can be a particularized machine, such as a portable computing device, a thin client, a notebook, a netbook, a smartphone, personal digital assistant, or a cellular phone, and as specific examples, an Apple iPhone (TM), Palm Centro (TM), or Moto Q Global (TM).

For illustrative purposes, the navigation system 100 is described with the second device 106 as a non-mobile computing device, although it is understood that the second device 106 can be different types of computing devices. For example, the second device 106 can also be a mobile computing device, such as notebook computer, another client device, or a different type of client device. The second device 106 can be a standalone device, or can be incorporated with a vehicle, for example a car, truck, bus, or train.

Also for illustrative purposes, the navigation system 100 is shown with the second device 106 and the first device 102 as end points of the communication path 104, although it is understood that the navigation system 100 can have a different partition between the first device 102, the second device 106, and the communication path 104. For example, the first device 102, the second device 106, or a combination thereof can also function as part of the communication path 104.

The communication path 104 can be a variety of networks. For example, the communication path 104 can include wireless communication, wired communication, optical, ultrasonic, or the combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path 104. Ethernet, digital subscriber line (DSL), fiber to the home (FTTH), and plain old telephone service (POTS) are examples of wired communication that can be included in the communication path 104.

Further, the communication path 104 can traverse a number of network topologies and distances. For example, the communication path 104 can include direct connection, personal area network (PAN), local area network (LAN), metropolitan area network (MAN), wide area network (WAN) or any combination thereof.

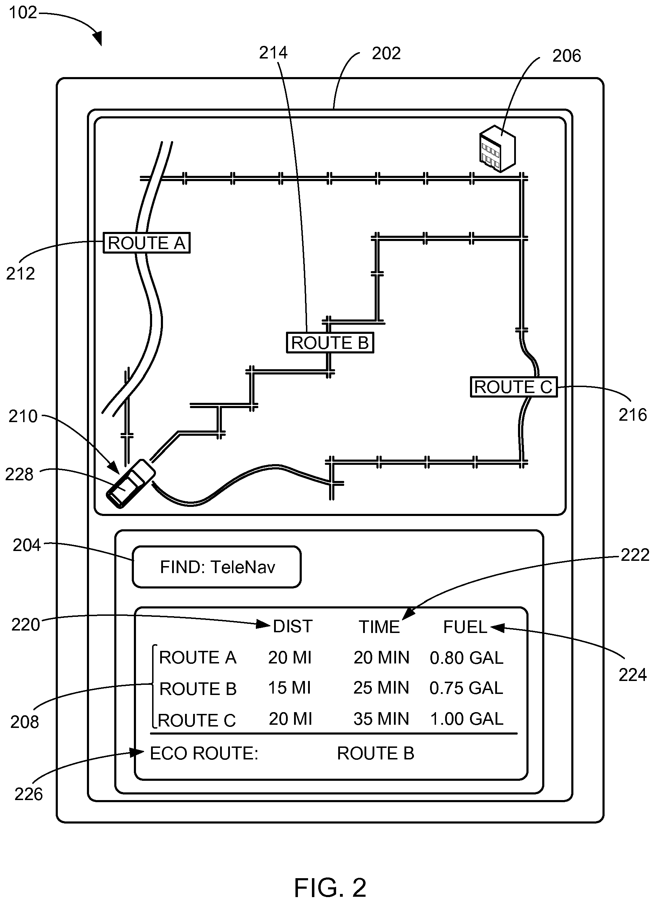

Referring now to FIG. 2, therein is shown an example of a display interface 202 of the first device 102. The first device 102 can receive a request 204 for a destination 206. The request 204 is defined as a query received from a user, the navigation system 100, or a combination thereof. For example, the request 204 can be a command entered into the first device 102.

The destination 206 is defined as a location that the user desires to reach or the end location for a navigation session running on the navigation system 100. For example the destination 206 can be a place of business, a school, or a residence. As a further example, the destination 206 can be based on the request 204 for a non-specified location, such as "the nearest gas station" or "the closest post office," or a specified location with a unique address, such as "1130 Kifer Rd., Sunnyvale, CA".

The display interface 202 can display a start location 210. The start location 210 is defined as the physical location of the first device 102 at the time the first device 102 receives the request 204 for the destination 206. For example, the start location 210 can be the physical location where the user inputs the request 204 into the navigation system 100.

The display interface 202 can display candidate routes 208. The candidate routes 208 are defined as alternative routes for traveling from an initial location to an ending location. The candidate routes 208 can provide alternative paths or routes for a user when traveling from the start location 210 to the destination 206. For example, the candidate routes 208 can be routes that enable the user to travel the shortest distance, spend the shortest amount of time traveling, use the least amount of fuel, or a combination thereof when traveling from the start location 210 to the destination 206. The candidate routes 208 can include a first candidate route 212, a second candidate route 214, and a third candidate route 216.

For illustrative purposes, the navigation system 100 is shown having three of the candidate routes 208, including the first candidate route 212 labeled "route A," the second candidate route 214 labeled "route B," and the third candidate route 216 labeled "route C," although it is understood that the navigation system 100 can include a different number of the candidate routes 208. For example, the navigation system 100 can include fewer or more than three of the candidate routes 208.

The candidate routes 208 can include a route distance 220, a route travel time 222, and a route fuel cost 224. The route distance 220 is defined as the total distance of the route between the initial location and the end location. The route distance 220 can be the total distance between the start location 210 and the destination 206 along the candidate routes 208. As an example, the route distance 220 is shown having distance measured in miles, although it is understood that the route distance 220 can be shown having any unit of distance measurement, such as feet or kilometers. For illustrative purposes, the first candidate route 212, the second candidate route 214, and the third candidate route 216 can have the route distances 220 as 20 miles, 15 miles, and 20 miles, respectively, although it is understood that the candidate routes 208 can have different values for the route distance 220.

The route travel time 222 is defined as the total estimated or predicted amount of time spent while traveling along the route. The route travel time 222 can be the estimated time of travel between the start location 210 and the destination 206 along each of the candidate routes 208. As an example, the route travel time 222 is shown having time measured in minutes, although it is understood that the route travel time 222 can be shown having any unit of time measurement, such as hours, seconds, or a combination thereof. For illustrative purposes, the first candidate route 212, the second candidate date route 214, and the third candidate route 216 can have the route travel time 222 as 20 minutes, 25 minutes, and 35 minutes, respectively, although it is understood that the candidate routes 208 can have different values for the route travel time 222.

The route fuel cost 224 is defined as the total amount of fuel consumed by the vehicle due to distance traveled, acceleration of the vehicle, and time spent in an idle state while traveling along a route. The route fuel cost 224 can be the amount of fuel consumed by a user vehicle 228 while traveling between the start location 210 and the destination 206 along the candidate routes 208. For example, the route fuel cost 224 is shown having fuel cost measured in gallons, although it is understood that the route fuel cost 224 can be shown having any unit of measurement, such electric units, other volume units, such as liters, weight units, such as pounds or kilograms, or a combination thereof. For illustrative purposes, the first candidate route 212, the second candidate route 214, and the third candidate route 216 can have the route fuel cost 224 as 0.80 gallons, 0.75 gallons, and 1.00 gallons, respectively, although it is understood that the candidate routes 208 can have different values for the route fuel cost 224.

The user vehicle 228 is defined as the vehicle a user travels in while traveling along a route. For example, the user vehicle 228 can be a gasoline powered automobile, a hybrid fuel automobile, an electric automobile, a motorcycle, a scooter, or any other vehicle that can use fuel for operation.

The display interface 202 can display an ecological route 226. The ecological route 226 is defined as a route between two locations that consumes the least amount of fuel. The ecological route 226 can be one of the candidate routes 208 having the lowest value of the route fuel cost 224. For illustrative purposes, the ecological route 226 can be selected as the second candidate route 214 because it has the lowest value of the route fuel cost 224.

For illustrative purposes, the display interface 202 is shown with the candidate routes 208, although it is understood that the display interface 202 can be shown differently. For example, the display interface 202 can be shown without the candidate routes 208. In another example, the display interface 202 can be shown with only the ecological route 226.

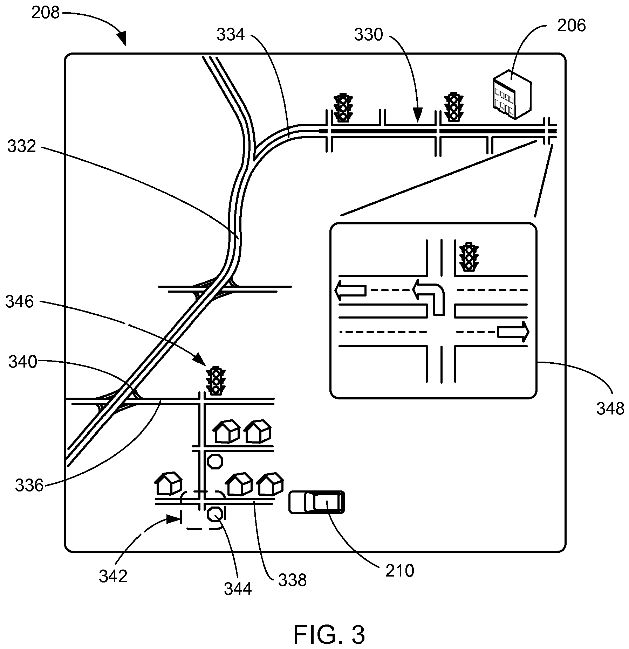

Referring now to FIG. 3, therein is shown an example of one of the candidate routes 208 of FIG. 2. The candidate routes 208 can connect the start location 210 and the destination 206 with one or more route segments 330. The route segments 330 are defined as a categorization of the portions of the route based on the type of road way, maximum speed limit, location of the segment, or a combination thereof. For example, the route segments 330 can be highway segments 332, artery segments 334, local segments 336, residential segments 338, or ramp segments 340.

The highway segments 332 are defined as roadways having no intersections with cross traffic that requires stopping of the flow of traffic. The highway segments 332 can have higher maximum speed limits compared to other types of the route segments 330. For example, the highway segments 332 can be freeways typically having a maximum speed limit between 55 and 75 miles per hour.

The artery segments 334 are defined as roadways having few intersections with cross traffic. For example, the artery segments 334 can be expressways having extended stretches with no intersections. As a further example, the artery segments 334 can have intersections that do not yield to cross traffic. In yet a further example, the artery segments 334 can be roadways at the end of one of the highway segments 332 that transitions directly into one of the local segments 336. The artery segments 334 can typically have maximum speed limits less that or equivalent to the highway segments 332, such as 45 to 65 miles per hour.

The local segments 336 are defined as roadways having intersections typically governed by traffic signals that require yielding to cross traffic. The local segments 336 can be the roadways within cities and towns with intersections or country roads having lower speed limits. As an example, the local segments 336 can typically have maximum speed limits between 35 and 55 miles per hour.

The residential segments 338 are defined as roadways having a low speed limit and intersections governed by stop signs. For example, the residential segments 338 can typically have maximum speed limits between 10 and 35 miles an hour. In another example, the residential segments 338 can be within residential areas, such as housing developments and apartment complexes. As a further example, the residential segments 338 can run adjacent to schools and parks. In yet a further example, the residential segments 338 can branch off from the local segments 336.

The ramp segments 340 are defined as roadways that connect different segments of the route. The ramp segments 340 can connect one of the route segments 330 or provides access from one of the route segments 330 to another one of the route segments 330. For example, one of the ramp segments 340 can connect between one of the highway segments 332 to another one of the highway segments 332. In another example, the ramp segments 340 can provide access from one of the local segments 336 to one of the highway segments 332 or as an exit from one of the highway segments 332 to one of the local segments 336.

The candidate routes 208 can include segment transitions 342. The segment transitions 342 are defined as the portion of a route between two segments of the route, as depicted by the dashed box. For example, the segment transitions 342 are typically associated with a stop resulting from a traffic signal or a stop sign or a turn along the candidate routes 208. As a further example, the segment transitions 342 can be points along the candidate routes 208 between one of the highway segments 332 and one of the ramp segments 340, one of the local segments 336 and another one of the local segments 336, or one of the residential segments 338 to one of the local segments 336.

The route segments 330 can include a divided road 348. The divided road 348 is defined as the roadway having a barrier between opposing directions of traffic. For example, the divided road 348 can be a local segment having a concrete island or divider between opposing directions of traffic. In another example, the divided road 348 can be a single one of the route segments 330, depicted on a map or by map data, with opposing directions of traffic as two separate ones of the route segments 330.

The candidate routes 208 can include multiple instances of a single type of one of the route segments 330, a combination of different types of the route segments 330, or a combination thereof. For example, the candidate routes 208 can include one or more of the residential segments 338, the local segments 336, or the highway segments 332. As a specific example, the candidate routes 208 illustrated in FIG. 3 begins at the start location 210 with multiple ones of the residential segments 338. One of the residential segments 338 can have one of the segment transitions 342 between another one of the residential segments 338, which is shown as a stop sign 344. As a further example, one of the segment transitions 342 between one of the residential segments 338 and another one of the residential segments 338 can include a right turn.

To continue the example, another one of the residential segments 338 can be followed by one of the local segments 336. Another one of the residential segments 338 can have one of the segment transitions 342 with one of the local segments 336, which is shown as a traffic signal 346. The segment transitions 342 between another one of the residential segments 338 and one of the local segments 336 can include a left turn. One of the local segments 336 can be followed by one of the ramp segments 340. One of the ramp segments 340 can be followed by one of the highway segments 332. One of the highway segments 332 can be followed by one of the artery segments 334. One of the artery segments 334 can be followed by a further one of the local segments 336.

To further continue the example, the further one of the local segments 336 can include the divided road 348. The further one of the local segments 336 can include a "u-turn" at an intersection of the divided road 348 to reach the destination 206.

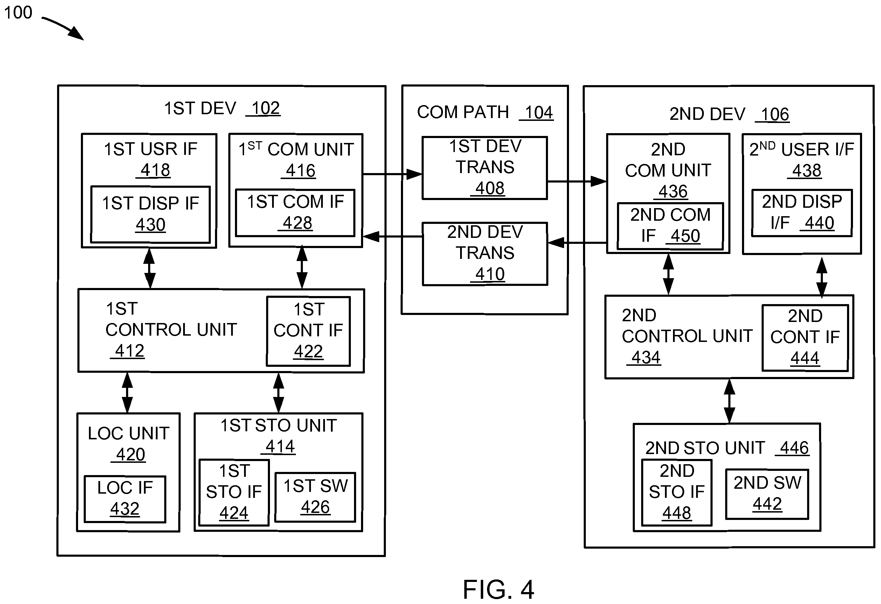

Referring now to FIG. 4, therein is shown an exemplary block diagram of the navigation system 100. The navigation system 100 can include the first device 102, the communication path 104, and the second device 106. The first device 102 can send information in a first device transmission 408 over the communication path 104 to the second device 106. The second device 106 can send information in a second device transmission 410 over the communication path 104 to the first device 102.

For illustrative purposes, the navigation system 100 is shown with the first device 102 as a client device, although it is understood that the navigation system 100 can have the first device 102 as a different type of device. For example, the first device 102 can be a server.

Also for illustrative purposes, the navigation system 100 is shown with the second device 106 as a server, although it is understood that the navigation system 100 can have the second device 106 as a different type of device. For example, the second device 106 can be a client device.

For brevity of description in this embodiment of the present invention, the first device 102 will be described as a client device and the second device 106 will be described as a server device. The present invention is not limited to this selection for the type of devices. The selection is an example of the present invention.

The first device 102 can include a first control unit 412, a first storage unit 414, a first communication unit 416, a first user interface 418, and a location unit 420. The first control unit 412 can include a first control interface 422. The first control unit 412 can execute a first software 426 to provide the intelligence of the navigation system 100.

The first control unit 412 can be implemented in a number of different manners. For example, the first control unit 412 can be a processor, an embedded processor, a microprocessor, a hardware control logic, a hardware finite state machine (FSM), a digital signal processor (DSP), or a combination thereof. The first control interface 422 can be used for communication between the first control unit 412 and other functional units in the first device 102. The first control interface 422 can also be used for communication that is external to the first device 102.

The first control interface 422 can receive information from the other functional units or from external sources, or can transmit information to the other functional units or to external destinations. The external sources and the external destinations refer to sources and destinations external to the first device 102.

The first control interface 422 can be implemented in different ways and can include different implementations depending on which functional units or external units are being interfaced with the first control interface 422. For example, the first control interface 422 can be implemented with a pressure sensor, an inertial sensor, a microelectromechanical system (MEMS), optical circuitry, waveguides, wireless circuitry, wireline circuitry, or a combination thereof.

The location unit 420 can generate location information, current heading, and current speed of the first device 102, as examples. The location unit 420 can be implemented in many ways. For example, the location unit 420 can function as at least a part of a global positioning system (GPS), an inertial navigation system, a cellular-tower location system, a pressure location system, or any combination thereof.

The location unit 420 can include a location interface 432. The location interface 432 can be used for communication between the location unit 420 and other functional units in the first device 102. The location interface 432 can also be used for communication that is external to the first device 102.

The location interface 432 can receive information from the other functional units or from external sources, or can transmit information to the other functional units or to external destinations. The external sources and the external destinations refer to sources and destinations external to the first device 102.

The location interface 432 can include different implementations depending on which functional units or external units are being interfaced with the location unit 420. The location interface 432 can be implemented with technologies and techniques similar to the implementation of the first control interface 422.

The first storage unit 414 can store the first software 426. The first storage unit 414 can also store the relevant information, such as advertisements, points of interest (POI), navigation routing entries, or any combination thereof.

The first storage unit 414 can be a volatile memory, a nonvolatile memory, an internal memory, an external memory, or a combination thereof. For example, the first storage unit 414 can be a nonvolatile storage such as non-volatile random access memory (NVRAM), Flash memory, disk storage, or a volatile storage such as static random access memory (SRAM).

The first storage unit 414 can include a first storage interface 424. The first storage interface 424 can be used for communication between the location unit 420 and other functional units in the first device 102. The first storage interface 424 can also be used for communication that is external to the first device 102.

The first storage interface 424 can receive information from the other functional units or from external sources, or can transmit information to the other functional units or to external destinations. The external sources and the external destinations refer to sources and destinations external to the first device 102.

The first storage interface 424 can include different implementations depending on which functional units or external units are being interfaced with the first storage unit 414. The first storage interface 424 can be implemented with technologies and techniques similar to the implementation of the first control interface 422.

The first communication unit 416 can enable external communication to and from the first device 102. For example, the first communication unit 416 can permit the first device 102 to communicate with the second device 106 of FIG. 1, an attachment, such as a peripheral device or a computer desktop, and the communication path 104.

The first communication unit 416 can also function as a communication hub allowing the first device 102 to function as part of the communication path 104 and not limited to be an end point or terminal unit to the communication path 104. The first communication unit 416 can include active and passive components, such as microelectronics or an antenna, for interaction with the communication path 104.

The first communication unit 416 can include a first communication interface 428. The first communication interface 428 can be used for communication between the first communication unit 416 and other functional units in the first device 102. The first communication interface 428 can receive information from the other functional units or can transmit information to the other functional units.

The first communication interface 428 can include different implementations depending on which functional units are being interfaced with the first communication unit 416. The first communication interface 428 can be implemented with technologies and techniques similar to the implementation of the first control interface 422.

The first user interface 418 allows a user (not shown) to interface and interact with the first device 102. The first user interface 418 can include an input device and an output device. Examples of the input device of the first user interface 418 can include a keypad, a touchpad, soft-keys, a keyboard, a microphone, or any combination thereof to provide data and communication inputs.

The first user interface 418 can include a first display interface 430. The first display interface 430 can include a display, a projector, a video screen, a speaker, or any combination thereof.

The first control unit 412 can operate the first user interface 418 to display information generated by the navigation system 100. The first control unit 412 can also execute the first software 426 for the other functions of the navigation system 100, including receiving location information from the location unit 420. The first control unit 412 can further execute the first software 426 for interaction with the communication path 104 via the first communication unit 416.

The second device 106 can be optimized for implementing the present invention in a multiple device embodiment with the first device 102. The second device 106 can provide the additional or higher performance processing power compared to the first device 102. The second device 106 can include a second control unit 434, a second communication unit 436, and a second user interface 438.

The second user interface 438 allows a user (not shown) to interface and interact with the second device 106. The second user interface 438 can include an input device and an output device. Examples of the input device of the second user interface 438 can include a keypad, a touchpad, soft-keys, a keyboard, a microphone, or any combination thereof to provide data and communication inputs. Examples of the output device of the second user interface 438 can include a second display interface 440. The second display interface 440 can include a display, a projector, a video screen, a speaker, or any combination thereof.

The second control unit 434 can execute a second software 442 to provide the intelligence of the second device 106 of the navigation system 100. The second software 442 can operate in conjunction with the first software 426. The second control unit 434 can provide additional performance compared to the first control unit 412.

The second control unit 434 can operate the second user interface 438 to display information. The second control unit 434 can also execute the second software 442 for the other functions of the navigation system 100, including operating the second communication unit 436 to communicate with the first device 102 over the communication path 104.

The second control unit 434 can be implemented in a number of different manners. For example, the second control unit 434 can be a processor, an embedded processor, a microprocessor, a hardware control logic, a hardware finite state machine (FSM), a digital signal processor (DSP), or a combination thereof.

The second control unit 434 can include a second controller interface 444. The second controller interface 444 can be used for communication between the second control unit 434 and other functional units in the second device 106. The second controller interface 444 can also be used for communication that is external to the second device 106.

The second controller interface 444 can receive information from the other functional units or from external sources, or can transmit information to the other functional units or to external destinations. The external sources and the external destinations refer to sources and destinations external to the second device 106.

The second controller interface 444 can be implemented in different ways and can include different implementations depending on which functional units or external units are being interfaced with the second controller interface 444. For example, the second controller interface 444 can be implemented with a pressure sensor, an inertial sensor, a microelectromechanical system (MEMS), optical circuitry, waveguides, wireless circuitry, wireline circuitry, or a combination thereof.

A second storage unit 446 can store the second software 442. The second storage unit 446 can also store the relevant information, such as advertisements, points of interest (POI), navigation routing entries, or any combination thereof. The second storage unit 446 can be sized to provide the additional storage capacity to supplement the first storage unit 414.

For illustrative purposes, the second storage unit 446 is shown as a single element, although it is understood that the second storage unit 446 can be a distribution of storage elements. Also for illustrative purposes, the navigation system 100 is shown with the second storage unit 446 as a single hierarchy storage system, although it is understood that the navigation system 100 can have the second storage unit 446 in a different configuration. For example, the second storage unit 446 can be formed with different storage technologies forming a memory hierarchal system including different levels of caching, main memory, rotating media, or off-line storage.

The second storage unit 446 can be a volatile memory, a nonvolatile memory, an internal memory, an external memory, or a combination thereof. For example, the second storage unit 446 can be a nonvolatile storage such as non-volatile random access memory (NVRAM), Flash memory, disk storage, or a volatile storage such as static random access memory (SRAM).

The second storage unit 446 can include a second storage interface 448. The second storage interface 448 can be used for communication between the location unit 420 and other functional units in the second device 106. The second storage interface 448 can also be used for communication that is external to the second device 106.

The second storage interface 448 can receive information from the other functional units or from external sources, or can transmit information to the other functional units or to external destinations. The external sources and the external destinations refer to sources and destinations external to the second device 106.

The second storage interface 448 can include different implementations depending on which functional units or external units are being interfaced with the second storage unit 446. The second storage interface 448 can be implemented with technologies and techniques similar to the implementation of the second controller interface 444.

The second communication unit 436 can enable external communication to and from the second device 106. For example, the second communication unit 436 can permit the second device 106 to communicate with the first device 102 over the communication path 104.

The second communication unit 436 can also function as a communication hub allowing the second device 106 to function as part of the communication path 104 and not limited to be an end point or terminal unit to the communication path 104. The second communication unit 436 can include active and passive components, such as microelectronics or an antenna, for interaction with the communication path 104.

The second communication unit 436 can include a second communication interface 450. The second communication interface 450 can be used for communication between the second communication unit 436 and other functional units in the second device 106. The second communication interface 450 can receive information from the other functional units or can transmit information to the other functional units.

The second communication interface 450 can include different implementations depending on which functional units are being interfaced with the second communication unit 436. The second communication interface 450 can be implemented with technologies and techniques similar to the implementation of the second controller interface 444.

The first communication unit 416 can couple with the communication path 104 to send information to the second device 106 in the first device transmission 408. The second device 106 can receive information in the second communication unit 436 from the first device transmission 408 of the communication path 104.

The second communication unit 436 can couple with the communication path 104 to send information to the first device 102 in the second device transmission 410. The first device 102 can receive information in the first communication unit 416 from the second device transmission 410 of the communication path 104. The navigation system 100 can be executed by the first control unit 412, the second control unit 434, or a combination thereof.

For illustrative purposes, the second device 106 is shown with the partition having the second user interface 438, the second storage unit 446, the second control unit 434, and the second communication unit 436, although it is understood that the second device 106 can have a different partition. For example, the second software 442 can be partitioned differently such that some or all of its function can be in the second control unit 434 and the second communication unit 436. Also, the second device 106 can include other functional units not shown in FIG. 4 for clarity.

The functional units in the first device 102 can work individually and independently of the other functional units. The first device 102 can work individually and independently from the second device 106 and the communication path 104.

The functional units in the second device 106 can work individually and independently of the other functional units. The second device 106 can work individually and independently from the first device 102 and the communication path 104.

For illustrative purposes, the navigation system 100 is described by operation of the first device 102 and the second device 106. It is understood that the first device 102 and the second device 106 can operate any of the modules and functions of the navigation system 100. For example, the first device 102 is described to operate the location unit 420, although it is understood that the second device 106 can also operate the location unit 420.

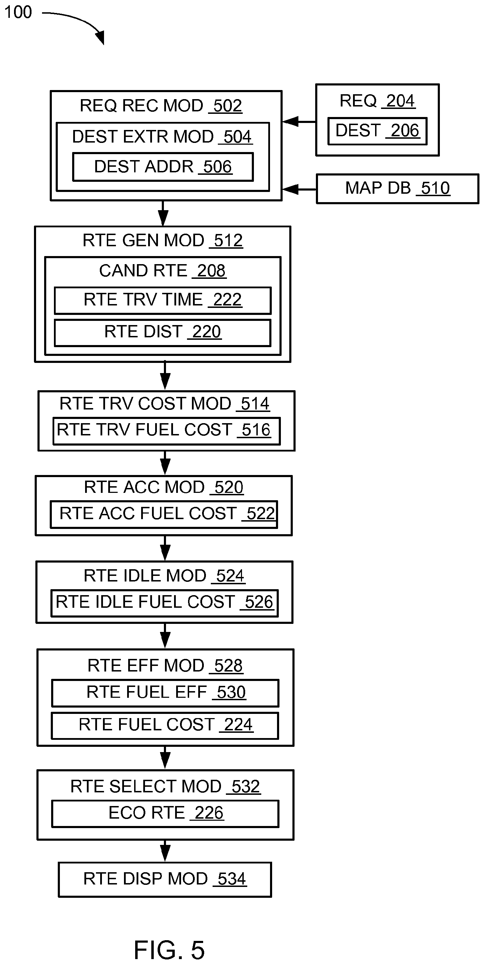

Referring now to FIG. 5, therein is shown a control flow of the navigation system 100. The navigation system 100 can include a request receiver module 502 coupled to the first storage unit 414 of FIG. 4. The request receiver module 502 receives requests to generate navigation instructions to a location. The request receiver module 502 can receive the request 204 of FIG. 2 to generate navigation instructions to the destination 206.

The request receiver module 502 can receive the request 204 in a number of different ways. For example, the request receiver module 502 can receive the request 204 from external sources, such as a user or remote server, or internal sources, such as from onboard memory. In a further example, the user can enter the request 204 by manually typing in, selecting from a list, or speaking a voice command. As another example, the request 204 can be retrieved automatically from a remote server or onboard memory.

The request receiver module 502 can include a destination extraction module 504. The destination extraction module 504 extracts an address associated with a location. The destination extraction module 504 can extract a destination address 506 associated with the destination 206. The destination address 506 is defined as an identification for the physical location of the destination 206. For example, the destination address 506 can be an actual address, such as "1130 Kifer Rd., Sunnyvale, CA", the longitude and latitude coordinates of the destination 206, or a combination thereof.

The format and information for the destination address 506 can vary depending on the country. For example, the destination address 506 can include township, province, and district in addition to a numeric designation.

The destination extraction module 504 can extract the destination address 506 in a number of different ways. For example, the destination extraction module 504 can extract the destination address 506 by searching for the physical address of the destination 206. As a further example, the destination extraction module 504 can extract the destination address from a map database 510.

The map database 510 is defined as a database containing information about locations, points of interest, streets, and highways. For example, the map database 510 can contain information about the destination 206 including the physical address, the nature of the location, such as whether the location is a residential location or a place of business, hours of operation, or any other relevant information to the location. As another example, the map database 510 can contain information about roadways, including the number of lanes, speed limits, the nature or type of the roadway, such as whether the roadway is a highway, an expressway, traffic patterns, and increases or decreases in elevation. In yet another example, the map database 510 can contain information about intersections, including the location of stop signs, the location and cycle time of traffic signals, or limits and time restrictions on turns.

The map database 510 can be part of an integrated or onboard storage unit, such as a hard drive or a data disk, or a remote storage unit, such as a data server, that stores the destination address 506. The map database 510 can contain historic information based on the experience of other users.

The navigation system 100 can include a route generation module 512 coupled to the request receiver module 502. The route generation module 512 is for generating one or more potential routes between one location and another location and calculate the total distance and travel time of a route. Each of these functions will be described in greater detail below.

The route generation module 512 can receive the start location 210 and the destination 206. The route generation module 512 can generate the candidate routes 208 and can calculate the route travel time 222 and the route distance 220 for the candidate routes 208 with the start location 210, the destination 206, and the map database 510.

The navigation system 100 can include a route travel cost module 514 coupled to the route generation module 512. The route travel cost module 514 is for calculating the amount of fuel consumed by a vehicle based on vehicle fuel efficiency, vehicle speed, and the travel distance along a route. The details of the function will be discussed in greater detail below.

The route travel cost module 514 can receive the candidate routes 208. The route travel cost module 514 can calculate a route travel fuel cost 516. The route travel fuel cost 516 is defined as the amount of fuel consumed by a vehicle based on the distance traveled along a route.

The navigation system 100 can include a route acceleration module 520 coupled to the route generation module 512. The route acceleration module 520 is for calculating the amount of fuel consumed by a vehicle when accelerating from a stationary state, accelerating from a low speed to a higher speed, and the total amount of fuel consumed due to acceleration while traveling along a route. Each of these functions will be described in greater detail below.

The route acceleration module 520 can receive the candidate routes 208. The route acceleration module 520 can calculate a route acceleration fuel cost 522 for the user vehicle 228. The route acceleration fuel cost 522 is defined as the total amount of fuel consumed by a vehicle due to acceleration while traveling along a route.

The navigation system 100 can include a route idle module 524 coupled to the route acceleration module 520. The route idle module 524 is for calculating the time the vehicle is in an idle state and the amount of fuel consumed by the vehicle while in an idle state while traveling along the route. Each of these functions will be discussed in greater detail below.

The route idle module 524 can receive the candidate routes 208. The route idle module 524 can calculate a route idle fuel cost 526. The route idle fuel cost 526 is defined as the total amount of fuel consumed by a vehicle while in an idle state along a route.

The navigation system 100 can include a route efficiency module 528 coupled to the route idle module 524. The route efficiency module 528 is for calculating the total amount of fuel consumed by a vehicle while traveling along a route and the fuel efficiency of a route. In addition to the route idle module 524, the route efficiency module 528 can be coupled to the route generation module 512, the route travel cost module 514, the route acceleration module 520, or a combination thereof.

The route efficiency module 528 can calculate the route fuel cost 224. The route efficiency module 528 can calculate the route fuel cost 224 as the sum of the route travel fuel cost 516, the route acceleration fuel cost 522, and the route idle fuel cost 526. For example, the route efficiency module 528 can calculate the route fuel cost 224 for each of the candidate routes 208

The route efficiency module 528 can calculate a route fuel efficiency 530. The route fuel efficiency 530 is defined as the distance traveled per unit of fuel consumed for a route. The route efficiency module 528 can calculate the route fuel efficiency 530 by dividing the route distance 220 by the route fuel cost 224 for a given one of the candidate routes 208.

The navigation system 100 can include a route selection module 532, coupled to the route efficiency module 528. The route selection module 532 is for selecting a recommended route, having the lowest amount of fuel consumed while traveling along the route, from one or more routes generated between one location and another location. The route selection module 532 can receive the candidate routes 208 and the route fuel cost 224 for each of the candidate routes 208.

The route selection module 532 can compare the route fuel cost 224 for each of the candidate routes 208 and select the ecological route 226 as one of the candidate routes 208 having the lowest value of the route fuel cost 224. As another example, the route selection module 532 can select the ecological route 226 as one of the candidate routes 208 having the highest value of the route fuel efficiency 530.

The navigation system 100 can include a route display module 534 coupled to the route selection module 532. The route display module 534 is for displaying a recommended route or navigation instruction between two locations on a visual interface. The route display module 534 can display the ecological route 226 on the display interface 202 of FIG. 2.

Optionally, the route display module 534 can display the candidate routes 208. Similarly, the route display module 534 can optionally display the route distance 220, the route travel time 222 and the route fuel cost 224 for the ecological route 226 and the candidate routes 208.

The navigation system 100 can be implemented on the first device 102 of FIG. 4, on the second device 106 of FIG. 4, or partitioned between the first device 102 and the second device 106. In an example for the first device 102 of FIG. 4, the first user interface 418 can receive the request 204 for the destination 206. The location unit 420 can identify the start location 210.

The first software 426 of FIG. 4 of the first device 102 can include the request receiver module 502, the destination extraction module 504, the route generation module 512, the route travel cost module 514, the route acceleration module 520, the route idle module 524, the route efficiency module 528, the route selection module 532, and the route display module 534. The first control unit 412 can execute the first software 426.

The first control unit 412 of FIG. 4 can execute the request receiver module 502 to receive the request 204. The first control unit 412 can execute the destination extraction module 504 to extract the destination 206 from the map database 510. The map database 510 can be stored on the first storage unit 414.

The first control unit 412 can execute the route travel cost module 514, the route acceleration module 520, and the route idle module 524, to calculate the route travel fuel cost 516, the route acceleration fuel cost 522, and the route idle fuel cost 526, respectively. The first control unit 412 can execute the route efficiency module 528 to calculate the route fuel cost 224 from the route travel fuel cost 516, the route acceleration fuel cost 522, and the route idle fuel cost 526.

The first control unit 412 can execute the route selection module 532 to select the ecological route 226. The first display interface 430 can display the ecological route 226.

In an example for the second device 106 of FIG. 4, the second software 442 of FIG. 4 can include the navigation system 100. For example, the second user interface 438 can receive the request 204 for the destination 206.

The second software 442 of FIG. 4 of the second device 106 can include the request receiver module 502, the destination extraction module 504, the route generation module 512, the route travel cost module 514, the route acceleration module 520, the route idle module 524, the route efficiency module 528, the route selection module 532, and the route display module 534. The second control unit 434 can execute the second software 442.

The second control unit 434 can execute the request receiver module 502 to receive the request 204. The second control unit 434 can execute the destination extraction module 504 to extract the destination 206 from the map database 510. The map database 510 can be stored on the second storage unit 446.

The second control unit 434 can execute the route travel cost module 514, the route acceleration module 520, and the route idle module 524, to calculate the route travel fuel cost 516, the route acceleration fuel cost 522, and the route idle fuel cost 526, respectively. The second control unit 434 can execute the route efficiency module 528 to calculate the route fuel cost 224 from the route travel fuel cost 516, the route acceleration fuel cost 522, and the route idle fuel cost 526.

The second control unit 434 can execute the route selection module 532 to select the ecological route 226. The second display interface 440 can display the ecological route 226.

In another example, the navigation system 100 can be partitioned between the first software 426 and the second software 442. For example, the first software 426 can include the request receiver module 502, the destination extraction module 504, the route selection module 532, and the route display module 534. The second software 442 can include the route generation module 512, the route travel cost module 514, the route acceleration module 520, the route idle module 524, and the route efficiency module 528. The second control unit 434 can execute modules partitioned on the second software 442 and the first control unit 412 can execute modules partitioned on the first software 426.

The first control unit 412 can execute the request receiver module 502 to receive the request 204. The first control unit 412 can execute the destination extraction module 504 to extract the destination 206 from the map database 510. The map database 510 can be stored on the first storage unit 414.

The second control unit 434 can execute the route travel cost module 514, the route acceleration module 520, and the route idle module 524, to calculate the route travel fuel cost 516, the route acceleration fuel cost 522, and the route idle fuel cost 526, respectively. The second control unit 434 can execute the route efficiency module 528 to calculate the route fuel cost 224 from the route travel fuel cost 516, the route acceleration fuel cost 522, and the route idle fuel cost 526.

The first control unit 412 can execute the route selection module 532 to select the ecological route 226. The first display interface 430 can display the ecological route 226.

The navigation system 100 describes the module functions or order as an example. The modules can be partitioned differently. For example, the map database 510 can be stored in the second storage unit 446 and the first software 426 can include the route efficiency module 528. Each of the modules can operate individually and independently of the other modules.

Furthermore, data generated in one module can be used by another module without being directly coupled to each other. For example, the route efficiency module 528 can receive the route travel fuel cost 516 from the route travel cost module 514. In another example, the route idle module 524 can receive the candidate routes 208 from the route generation module 512.

It has been discovered that the present invention provides the navigation system 100 having an accurate measure of the amount of fuel consumed by the user vehicle 228 for the candidate route 208. The candidate routes 208 having the route fuel cost 224 as the sum of the route travel fuel cost 516, the route acceleration fuel cost 522, and the route idle fuel cost 526 provides increased accuracy when calculating the amount of fuel consumed by the user vehicle 228.

The physical transformation from the user traveling along the route that consumes a large amount of fuel results in movement in the physical world, such as people using the first device 102 to generate the ecological route 226. The ecological route 226 displayed on the display interface 202 of the first device 102 causes people to travel along the ecological route 226 to the destination 206, resulting in movement in the physical world.

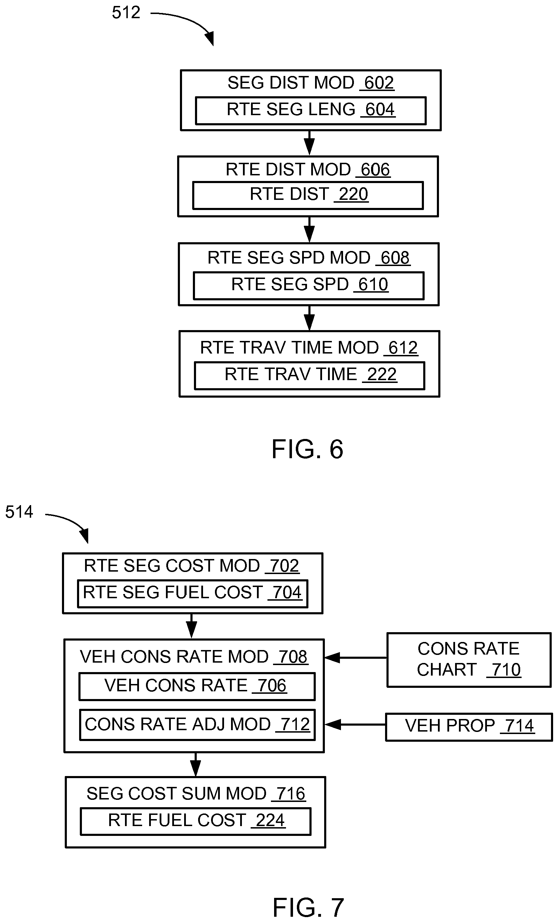

Referring now to FIG. 6, therein is shown a detailed view of the route generation module 512. The route generation module 512 can generate the candidate routes 208 from the start location 210 to the destination 206. The route generation module 512 can generate the candidate routes 208 of FIG. 2 having the highway segments 332 of FIG. 3, the artery segments 334 of FIG. 3, the ramp segments 340 of FIG. 3, the local segments 336 of FIG. 3, the residential segments 338 of FIG. 3, or a combination thereof.

The route generation module 512 can include a segment distance module 602 coupled to the route generation module 512. The segment distance module 602 is for calculating the length of the segment of the route. The segment distance module 602 can determine a route segment length 604 for each of the route segments 330. The route segment length 604 is defined the distance from one end of a segment to the other end of the segment when traveling along a route.

The segment distance module 602 can calculate the route segment length 604 in a number of different ways. For example, the segment distance module 602 can access the map database 510 to of FIG. 5 determine the starting point and end point of the each of the route segments 330 and calculate the distance along the route segments 330 between the start point and end point.

The route generation module 512 can include a route distance module 606 coupled to the segment distance module 602. The route distance module 606 is for calculating the total travel distance of a route. The route distance module 606 can calculate the route distance 220 for the candidate routes 208. For example, the route distance module 606 can calculate the route distance 220 by summing the route segment length 604 of all the route segments 330 of a particular section of the candidate routes 208.

The route generation module 512 can include a route segment speed module 608 coupled to the route distance module 606. The route segment speed module 608 is for determining the travel speed of the roadway along the candidate routes 208. The route segment speed module 608 can determine a route segment speed 610 for each of the route segments 330. The route segment speed 610 is defined as the speed of travel along a particular portion or segment of the route.

For example, the route segment speed 610 can be the actual speed of traffic along one of the route segments 330 at the time the candidate routes 208 are generated. In another example, the route segment speed 610 can be a historic average speed of the route segment speed 610 for the time at which the candidate routes 208 are generated. The historic average speed can be traffic speeds based on statistics, trends and experiences of other users traveling along a particular one of the route segments 330.

In a further example, the route segment speed 610 can be the expected or predicted speed of traffic of one of the route segments 330 for the time period at which the user vehicle 228 is expected to travel along the particular one of the route segments 330. In yet a further example, the route segment speed 610 can be the posted speed limit of the route segments 330. In yet a further example, the route segment speed 610 can be a speed to optimize fuel efficiency, which can be a speed that is lower than the speed limit or flow of traffic, such as when traveling up a steep grade.

The route segment speed module 608 can determine the route segment speed 610 in a number of different ways. For example, the route segment speed module 608 can access the map database 510 to determine the historic average speed of the route segments 330. In another example, the route segment speed module 608 can interface with the first communication unit 416 of FIG. 4 to access a real time or online traffic service that provides current and expected traffic speeds.

The route segment speed module 608 can determine the route segment speed 610 based on availability of information. For example, the route segment speed module 608 can prioritize the real time traffic speed over the historic average speed and can prioritize the historic average speed over the posted speed limit.

The route generation module 512 can include a route travel time module 612 coupled to the route segment speed module 608. The route travel time module 612 is for calculating the total time expected for traveling between the beginning of a route and the end of a route. The route travel time module 612 can calculate the route travel time 222 for each of the candidate routes 208. For example, the route travel time module 612 can calculate the route travel time 222 by summing the route segment length 604 divided by the route segment speed 610 for each of the route segments 330 of the candidate routes 208.

The navigation system 100 describes the module functions or order as an example. The modules can be partitioned differently. For example, the route travel time module 612 can be coupled to the segment distance module 602. Each of the modules can operate individually and independently of the other modules.

Furthermore, data generated in one module can be used by another module without being directly coupled to each other. For example, the route travel time module 612 can receive the route segment length 604 from the segment distance module 602.

Referring now to FIG. 7, therein is shown a detailed view of the route travel cost module 514. The route travel cost module 514 can include a route segment cost module 702 coupled to the route travel cost module 514. The route segment cost module 702 is for calculating the amount of fuel consumed by a vehicle while traveling along a segment of the route.

The route segment cost module 702 can calculate a route segment fuel cost 704. The route segment fuel cost 704 is defined as the amount of fuel used by the vehicle while traveling along a segment of a route. For example, the route segment fuel cost 704 can be the amount of fuel the user vehicle 228 consumes while traveling along one of the highway segments 332 or one of the local segments 336.

The route travel cost module 514 can calculate the route travel fuel cost 516 as the route segment length 604 divided by a vehicle fuel consumption rate 706 at the route segment speed 610. The vehicle fuel consumption rate 706 is defined as the distance the vehicle can travel per unit of fuel. For example, the vehicle fuel consumption rate 706 can be the distance the user vehicle 228 can travel with a specific volume, such as a gallon or liter, of gasoline.

The route travel cost module 514 can include a vehicle consumption rate module 708 coupled to the route segment cost module 702. The vehicle consumption rate module 708 is for calculating the vehicle fuel consumption rate 706.

The vehicle consumption rate module 708 can calculate the vehicle fuel consumption rate 706 as a function of the route segment speed 610. For example, the route travel cost module 514 can utilize information as included in a consumption rate chart 710, as an example, to determine the vehicle fuel consumption rate 706.

The consumption rate chart 710 is defined as a chart that includes a correlation the fuel consumption rate as a function of the speed of a vehicle. The consumption rate chart 710 will be discussed in greater detail below.

As an example, the route travel cost module 514 can utilize information as included in the consumption rate chart 710 to calculate the vehicle fuel consumption rate 706 for the route segment speed 610. In another example, the route travel cost module 514 can utilize information as included in the consumption rate chart 710 to calculate the speed of the user vehicle 228 having the highest value for the vehicle fuel consumption rate 706.

The route travel cost module 514 can include a consumption rate adjustment module 712 coupled to the route travel cost module 514. The consumption rate adjustment module 712 is for adjusting the fuel consumption rate of a vehicle based on vehicle properties 714. The vehicle properties 714 are defined as factors that may affect the rate at which the vehicle consumes fuel while traveling along the route. For example, the vehicle properties can include the age of the user vehicle 228, the loading, the condition, such as tire pressure. The consumption rate adjustment module 712 can increase or decrease the vehicle fuel consumption rate 706 of the user vehicle 228 to provide a more accurate value of the vehicle fuel consumption rate 706.

The route travel cost module 514 can include a segment cost sum module 716 coupled to the vehicle consumption rate module 708. The segment cost sum module 716 is for calculating the total amount of fuel consumed by the vehicle when traveling along a route. The segment cost sum module 716 can calculate the route fuel cost 224 as a sum of the route travel fuel cost 516 for each of the route segments 330 of the candidate routes 208.

The navigation system 100 describes the module functions or order as an example. The modules can be partitioned differently. For example, the segment cost sum module 716 can be coupled to the route segment cost module 702. Each of the modules can operate individually and independently of the other modules.

Further, data generated in one module can be used by another module without being directly coupled to each other. For example, the segment cost sum module 716 can receive the route segment fuel cost 704 from the route segment cost module 702.

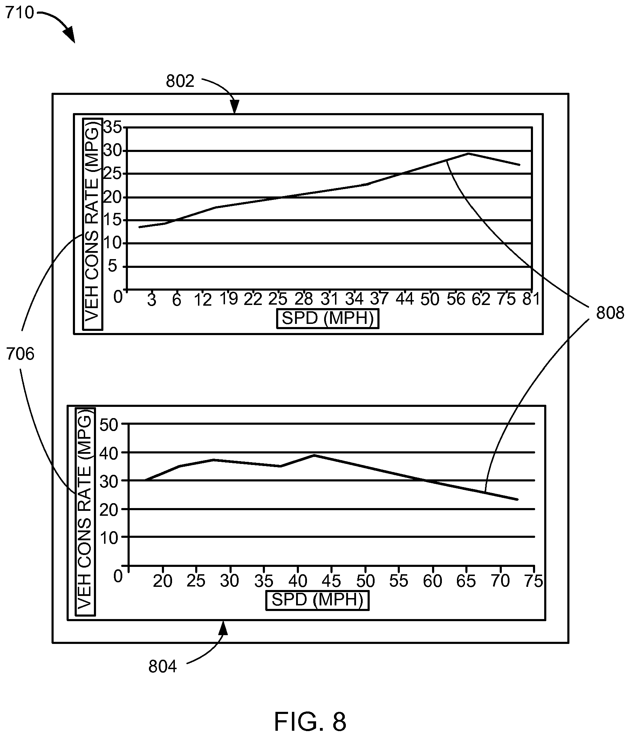

Referring now to FIG. 8, therein is shown an example of a first example chart 802 and a second example chart 804 of the consumption rate chart 710. The consumption rate chart 710 can correlate the speed of the user vehicle 228 of FIG. 2 with the vehicle fuel consumption rate 706. As an example, the first example chart 802 and the second example chart 804 can represent the consumption rate chart 710 for different types of the user vehicle 228, such as different vehicle models. In another example, the first example chart 802 and the second example chart 804 can represent the consumption rate chart 710 of the user vehicle 228 under different operating conditions, such as driving up a steep grade or while driving on a flat road.

The x-axis of the first example chart 802 and the second example chart 804 can represent a measurement of the speed of the user vehicle 228, in miles per hour. The y-axis of the first example chart 802 and the second example chart 804 can represent a measure of the vehicle fuel consumption rate 706.

The first example chart 802 and the second example chart 804 of the consumption rate chart 710 can include a consumption curve 808. The consumption curve 808 illustrates the correlation between the speed of the user vehicle 228 with the vehicle fuel consumption rate 706.

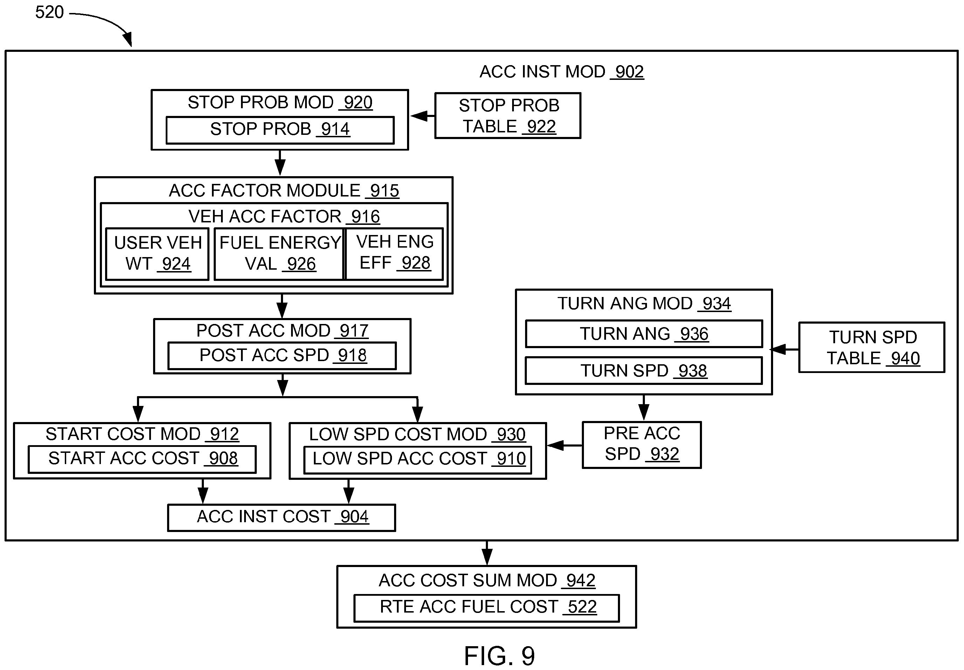

Referring now to FIG. 9, therein is shown a detailed view of the route acceleration module 520. The route acceleration module 520 can include an acceleration instance module 902 coupled to the route acceleration module 520. The acceleration instance module 902 is for calculating the amount of fuel consumed due to an instance of vehicle acceleration while traveling along the route. The acceleration instance module 902 can calculate an acceleration instance cost 904.

The acceleration instance cost 904 is defined as the amount of fuel consumed due to a single instance of vehicle acceleration while traveling along a route. For example, the acceleration instance cost 904 can be the amount of fuel consumed by the user vehicle 228 when the user vehicle 228 accelerates from a stationary state, such as a stop after the stop sign 344 of FIG. 3. In another example, the acceleration instance cost 904 can be the amount of fuel consumed by the user vehicle 228 when the user vehicle 228 accelerates from a lower speed to a higher speed, such as after a turn or when increasing speeds.

The acceleration instance module 902 can calculate the acceleration instance cost 904 as the sum of a start acceleration cost 908 and a low speed acceleration cost 910. The start acceleration cost 908 is defined as the amount of fuel consumed when a vehicle accelerates from a stationary state to a given speed. The low speed acceleration cost 910 is defined as the amount of fuel consumed when a vehicle accelerates from a low speed to a higher speed.

The acceleration instance module 902 can include a start cost module 912 coupled to the acceleration instance module 902. The start cost module 912 is for calculating the start acceleration cost 908. The start cost module 912 can calculate the start acceleration cost 908 with a stop probability 914, a vehicle acceleration factor 916, and a post acceleration speed 918.

The stop probability 914 is defined as the probability that a vehicle will be required to stop while traveling along a segment of a route. The stop probability 914 can be determined by a stop probability module 920, coupled to the route acceleration module 520. The stop probability module 920 can determine the stop probability 914 based on the type of a particular one of the route segments 330 and the route segment speed 610 of FIG. 6.

As an example, in general, the route segments 330 having a low value of the route segment speed 610 can have a higher value of the stop probability 914. Conversely, the route segments 330 having a higher value of the route segment speed 610 can have a lower value of the stop probability 914. As a specific example, the local segments 336 having the route segment speed 610 of 25 miles per hour can have a high value of the stop probability 914 compared to the route segment speed 610 of 45 miles per hour.

The stop probability 914 can be ranked according to the type of the route segments 330. For example, the residential segments 338 of FIG. 3 can generally have the highest values of the stop probability 914, followed the local segments 336 of FIG. 3, followed by the ramp segments 340, followed by the artery segments 334 of FIG. 3, and with the highway segments 332 having the lowest values of the stop probability 914.

The stop probability 914 can range between a value of "zero" and "one." The stop probability 914 of zero corresponds to a 0% probability of a required stop along a particular one of the route segments 330. Conversely, the stop probability of one corresponds to a 100% probability of stopping along a particular one of the route segments 330. As a specific example, a particular one of the highway segments 332 with the route segment speed 610 of 65 miles per hour can have the stop probability of "zero," since there is a very low probability that the user vehicle 228 will be required to stop. In another example, the residential segments 338 with the route segment speed 610 of 25 miles per hour can have the stop probability of "one," since there is a very high probability that the user vehicle 228 will be required to stop.

The stop probability 914 can be determined from information as included in a stop probability table 922. The stop probability table 922 is defined as a table having the information that correlates the rate of travel on a roadway to the type of roadway. The stop probability table 922 can include values of the stop probability 914 for different types of the route segments 330 at different values of the route segment speed 610. The stop probability table 922 will be discussed in greater detail below.

The vehicle acceleration factor 916 is defined as one half a user vehicle weight 924 divided by the product of a fuel energy value 926 and a vehicle engine efficiency 928 of the user vehicle 228. The vehicle acceleration factor 916 can be calculated with an acceleration factor module 915. The acceleration factor module 915 can be coupled to the acceleration instance module 902.

The user vehicle weight 924 is defined as the weight of the vehicle while traveling along the route. The user vehicle weight 924 can be predetermined based on the manufactured weight of the user vehicle 228 or can include the weight of after-market additions, upgrades, or accessories, such as roof racks. The user vehicle weight 924 can be adjusted to account for passenger and cargo loading. The user vehicle weight 924 can be extracted by the acceleration factor module 915 from an onboard memory, such as the first storage unit 414 of FIG. 4, through sensors attached to the user vehicle 288, or can be manually entered.

The fuel energy value 926 is defined as the amount of energy provided for a unit of fuel. For example, the amount of energy provided from combustion of gasoline can be approximately $1.29 \times 10^7$ joules/gallon. The fuel energy value 926 can be different for other types of energy sources, such as a battery in an electric engine.

The vehicle engine efficiency 928 is defined as the percentage of fuel energy that is used to power the vehicle. For example, for the user vehicle 228 having a gasoline engine, the vehicle engine efficiency 928 can be between 26 and 46%. The vehicle engine efficiency 928 can be different for different types of vehicle engines, such as for electric vehicles. The vehicle engine efficiency 928 can be extracted by the acceleration factor module 915 from an onboard memory, such as the first storage unit 414, or can be manually entered.

The acceleration factor module 915 can calculate the vehicle acceleration factor 916 according to an equation 1:

$$A_{VF} = \frac{1}{2} * M_c / (E_e * F_e)$$

*Equation 1*

$A_{VF}$ is the vehicle acceleration factor 916. $M_c$ is the user vehicle weight 924. $E_e$ is the vehicle engine efficiency 928. $F_e$ is the fuel energy value 926. As an example, the vehicle acceleration factor 916 for the user vehicle 228 having the user vehicle weight 924 of 1000 kilograms and the vehicle engine efficiency 928 of 30% can be approximately $2.58 \times 10^5$ (gallons*meters²/seconds²).

The post acceleration speed 918 is defined as the speed of a vehicle after accelerating from a stationary or stopped state or from a lower speed. For example, the post acceleration speed 918 can be the route segment speed 610 of the route segments 330 prior to acceleration of the user vehicle 228. As another example, the post acceleration speed 918 can be the route segment speed 610 of a subsequent one of the route segments 330.

The post acceleration speed 918 can be determined by a post acceleration module 917, coupled to the acceleration instance module 902. The post acceleration module 917 can determine the post acceleration speed 918 in a number of different ways. For example, the post acceleration module 917 can set the route segment speed 610.

The start acceleration cost 908 can be calculated as the product of the stop probability 914, the vehicle acceleration factor 916 and the square of the post acceleration speed 918, according to an equation 2:

$$C_{SA} = P_S * A_{VF} * V_{Post}$$

*Equation 2*

$C_{SA}$ is the start acceleration cost. $P_S$ is the stop probability 914. $A_{VF}$ is the vehicle acceleration factor 916. $V_{Post}$ is the post acceleration speed 918. For example, the start acceleration cost 908 having the stop probability of "one," the user vehicle 228 having the user vehicle weight 924 of 1000 kilograms, the vehicle engine efficiency 928 of 30%, and accelerating to the post acceleration speed 918 of 45 miles per hour can consume approximately 0.0523 gallons of gasoline.

The acceleration instance module 902 can include a low speed cost module 930 coupled to the route acceleration module 520. The low speed cost module 930 is for calculating the low speed acceleration cost 910. The low speed cost module 930 can calculate the low speed acceleration cost 910 with the stop probability 914, the vehicle acceleration factor 916, a pre-acceleration speed 932, and the post acceleration speed 918.

The pre-acceleration speed 932 is defined as the speed of the vehicle prior to acceleration to a higher speed. For example, the pre-acceleration speed 932 can be the route segment speed 610 of one of the route segments 330 prior to acceleration to another one of the route segments 330. As a specific example, the pre-acceleration speed 932 can be the route segment speed 610 of one of the ramp segments 340 prior to acceleration of the user vehicle 228 to the route segment speed 610 of one of the highway segments 332.

In another example, the pre-acceleration speed 932 can be a turn speed 938. The turn speed 938 is defined as the speed of the vehicle while negotiating the turn along the route. As a specific example, the turn speed 938 can be the speed of the user vehicle 228 when making a right turn, a u-turn, or a left turn when traveling along the route segments 330 or between one of the route segments 330 and another one of the route segments 330.

The acceleration instance module 902 can include a turn angle module 934, coupled to the route acceleration module 520. The turn angle module 934 is for calculating the speed of a turn as a function of the angle of the turn relative to the pre-turn orientation of the vehicle. The turn angle module 934 can calculate the turn speed 938 based on a turn angle 936. The turn angle 936 is defined as the overall change in direction of the vehicle before and after the turn.

As a reference example, the turn angle 936 of zero degrees corresponds to the orientation of the user vehicle 228 prior to the turn. The turn angle 936 can range from 0 degrees to 360 degrees and increasing in a clockwise direction. For example, a right turn can correspond to the turn angle 936 of 90 degrees, a left turn can correspond to the turn angle 936 of 270 degrees, and a u-turn can correspond to the turn angle 936 of 180 degrees. The turn speed 938 can vary depending on the turn angle 936.

The turn angle module 934 can calculate the turn speed 938 of the user vehicle 228 according to angle ranges as exemplified in a turn speed table 940. The turn speed table 940 is defined as a table having the information that correlates the angle of a turn to the speed of the vehicle while negotiating the turn. The turn speed table 940 will be discussed in greater detail below.

As an example, the turn speed 938 for a right turn, corresponding to the turn angle 936 of 90 degrees, can be 20 miles per hour. In another example, the turn speed 938 for a left turn, corresponding to the turn angle 936 of 270 degrees, can be 20 miles per hour. In yet another example, the turn speed 938 for a "u-turn," corresponding to the turn angle of 180 degrees, can be zero miles per hour, meaning that the turn requires a stop.

The turn angle module 934 can recognize and account for specific types of the turn angle 936. For example, the turn angle module 934 can recognize a turn, such as the "u-turn" at an intersection along the divided road 348, as exemplified in FIG. 3, as a single turn having a single one of the turn speed 938 with the turn angle 936 as a single values, such as 180 degrees for the "u-turn," rather than calculating the turn speed 938 for two separate turns. The route acceleration fuel cost 522 can be calculated based on the turn speed 938 along the divided road 348 as a single turn.

The low speed cost module 930 can calculate the low speed acceleration cost 910 as a product of the stop probability 914, the vehicle acceleration factor 916, and the difference between the post acceleration speed 918 squared and the pre-acceleration speed 932 squared, according to an equation 3:

$$C_{LSA} = P_S {}^* A_{VF} {}^* (V_{Post}{}^2 - V_{Pre}{}^2)$$

*Equation 3*

$C_{LSA}$ is the low speed acceleration cost 910. $P_S$ is the stop probability 914. $A_{VF}$ is the vehicle acceleration factor 916. $V_{Pre}$ is the post acceleration speed 918. $V_{Post}$ is the post acceleration speed 918. As an example, when the pre-acceleration speed 932 is greater than the post acceleration speed 918, such as when the user vehicle 228 is slowing down, the low speed acceleration cost 910 can have a value of no fuel consumed.

The route acceleration module 520 can calculate the route acceleration fuel cost 522 with an acceleration cost sum module 942. The acceleration cost sum module 942 can be coupled to the route acceleration module 520. The acceleration cost sum module 942 is for calculating the total amount of fuel consumed due vehicle acceleration while traveling along a route. The acceleration cost sum module 942 can calculate the route acceleration fuel cost 522 by summing each instance of the acceleration instance cost 904 for a given one of the candidate routes 208, having the stop probability 914, according to an equation 4:

$$C_A = \sum (C_{SA} + C_{LSA})$$

*Equation 4*

$C_A$ is the route acceleration fuel cost 522. $C_{SA}$ is the start acceleration cost 908. $C_{LSA}$ is the low speed acceleration cost 910. As an example, the acceleration cost sum module can calculate the route acceleration fuel cost 522 with the low speed acceleration cost 910 based on the turn speed 938 along the divided road 348 as a single turn.

The navigation system 100 describes the module functions or order as an example. The modules can be partitioned differently. For example, the low speed cost module 930 can be coupled to the stop probability module 920. Each of the modules can operate individually and independently of the other modules.

Furthermore, data generated in one module can be used by another module without being directly coupled to each other. For example, the low speed cost module 930 can receive the stop probability 914 from the stop probability module 920.

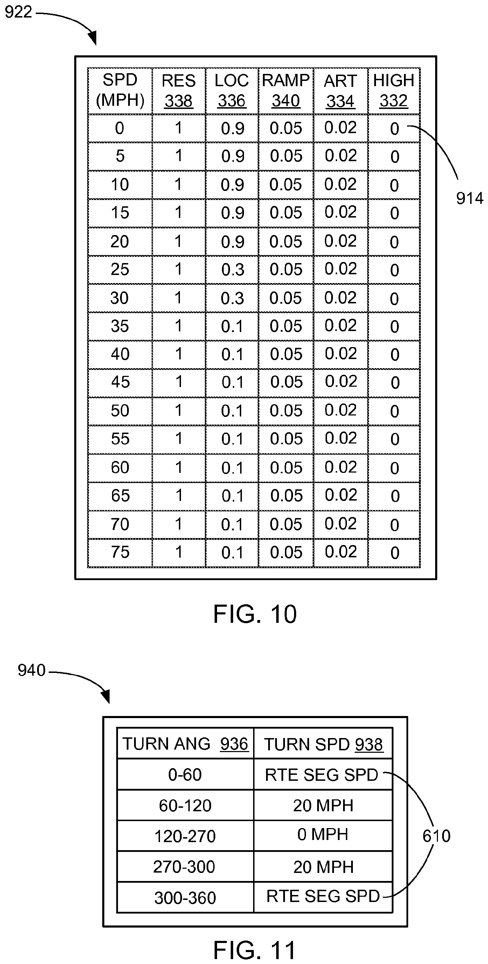

Referring now to FIG. 10, therein is shown an example of the stop probability table 922. The stop probability table 922 can display the relationship between the speed of the user vehicle 228 of FIG. 2 and the type of the route segments 330. The rows of the first column of the stop probability table can display the speed of the user vehicle 228. The rows of the remaining columns can display the stop probability 914 with the corresponding speed for the residential segments 338, the local segments 336, the ramp segments 340, the artery segments 334, and the highway segments 332.

For example, the speed of the user vehicle 228 of 25 miles per hour for the residential segments 338 can have the stop probability 914 of "one" which corresponds to a 100% probability of stopping while traveling along the residential segments 338. In another example, the local segments 336 having the speed of the user vehicle 228 of 45 miles per hour can have the stop probability 914 of "0.1" which corresponds to a 10% probability of stopping while traveling along the local segments 336.

The stop probability table 922 is just one example of the stop probability 914 for the combinations of the route segment speed 610 and the different types of the route segments 330. Furthermore, it is understood that the stop probability table 922 can have different values of the stop probability 914.

Referring now to FIG. 11, therein is shown an example of the turn speed table 940. The turn speed table 940 can display the relationship between the turn angle 936 and the turn speed 938. The rows of the first column of the turn speed table 940 can represent the range of the turn angle 936. The rows of the second column of the turn speed table 940 can represent the turn speed 938 corresponding to the range of the turn angle 936 in the first column.

For example, for the turn angle 936 between 0 and 60 degrees or 300 and 360 degrees, it is not necessary for the user vehicle 228 of FIG. 2 to reduce speed to negotiate the turn and the turn speed 938 can be equivalent to the route segment speed 610 prior to the turn. In another example, for the turn angle 936 between 60 and 120 degrees or 270 to 300 degrees, the turn speed 938 can be 20 miles per hour. In yet a further example, for the turn angle 936 between 120 and 270 degrees, the turn speed 938 can be zero miles per hour.

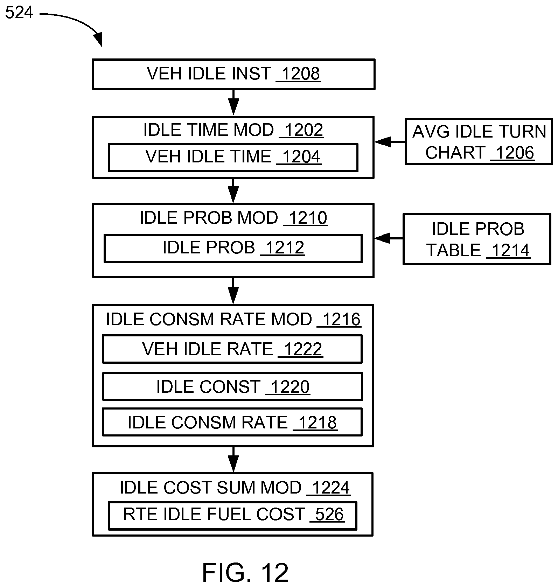

Referring now to FIG. 12, therein is shown a detailed view of the route idle module 524. The route idle module 524 can include an idle time module 1202 coupled to the route idle module 524. The idle time module 1202 is for calculating the time the vehicle is in an idle state while traveling along the route. The idle time module 1202 can calculate a vehicle idle time 1204 for each of the candidate routes 208 of FIG. 2. The vehicle idle time 1204 is defined as a predicted or expected time the vehicle is in an idle state while traveling along the routes.

The vehicle idle time 1204 can be a result of vehicle idle instances 1208, which is defined as an event that result a vehicle idle state. The vehicle idle state is defined as a state of vehicle operation where the vehicle is stationary, but the engine continues to run or consume fuel. As an example, the vehicle idle instances 1208 can include events such as a stop at the traffic signal 346 of FIG. 3, a stop at the stop sign 344 of FIG. 3, or a stop while waiting to make a turn. In another example, one of the vehicle idle instances 1208 can occur at one of the segment transitions 342 of FIG. 3 between one of the route segments 330 of FIG. 3 and another one of the route segments 330.

The idle time module 1202 can calculate different values of the vehicle idle time 1204 for specific types of the vehicle idle instances 1208. For example, the idle time module 1202 can calculate different times for the vehicle idle time 1204 when the user vehicle 228 of FIG. 2 is making a right turn, a left turn, or a u-turn. In a further example, the route idle fuel cost 526 can be calculated based on the turn angle 936 of the user vehicle 228 following one of the vehicle idle instances 1208.

The idle time module 1202 can utilize information as included in an average idle turn chart 1206 to calculate the vehicle idle time 1204 for different ones of the turn angle 936 of FIG. 9. The average idle turn chart 1206 is defined as a chart that includes a correlation of the time a vehicle is at an idle state with the angle of a turn. The average idle turn chart 1206 will be discussed in greater detail below.

In a specific example, a right turn, corresponding to the turn angle 936 of 90 degrees, can have the vehicle idle time 1204 of approximately 10 seconds, a left turn, corresponding to the turn angle 936 of 270 degrees, can have the vehicle idle time 1204 of approximately 17 seconds, and a u-turn, corresponding to the turn angle 936 of 180 degrees, can have the vehicle idle time 1204 of approximately 35 seconds.

In another example, the idle time module 1202 can calculate different values of the vehicle idle time 1204 for the traffic signal 346 of FIG. 3 that operate according to a set time before changing and the traffic signal 346 that operate according to sensors. The idle time module 1202 can access the map database 510 of FIG. 5 for the cycle time of the traffic signal 346.

As a further example, the idle time module 1202 can calculate different values of the vehicle idle time 1204 when traveling in different directions at an intersection having the traffic signal 346. More specifically, for the particular one of the segment transitions 342 of FIG. 3 having the traffic signal 346, between one of the local segments 336 of FIG. 3 and one of the residential segments 338, the idle time module 1202 can set a lower value of the vehicle idle time 1204 when traveling along one of the local segments 336 and a higher value of the vehicle idle time 1204 when traveling along the residential segments 338.

In a further example, the idle time module 1202 can establish constant time values for specific types of the vehicle idle instances 1208. For example, the idle time module 1202 can calculate the vehicle idle time 1204 as three seconds for a stop at the stop sign 344.

In yet a further example, the idle time module 1202 can adjust the value for the specific ones of the vehicle idle instances 1208 depending on the location and time of day. For example, the idle time module 1202 can increase the value of the vehicle idle time 1204 of the vehicle idle instances 1208 corresponding to the stop sign 344 or crosswalk adjacent to a school when the school is in session, particularly when students are arriving or departing from the school. Conversely, the idle time module 1202 can reduce the value of the vehicle idle time 1204 during hours when the school is not in session.

A given one of the candidate routes 208 can have one or more of the vehicle idle instances 1208. As a specific example, one of the candidate routes 208 as illustrated in FIG. 3, can have a first one of the vehicle idle instances 1208 at the stop sign 344 when making a right turn from one of the residential segments 338 to another one of the residential segments 338 and a second one of the vehicle idle instances 1208 at the traffic signal 346 when making a left turn from another one of the residential segments 338 to one of the local segments 336.

The vehicle idle time 1204 for a specific one of the vehicle idle instances 1208 can be calculated in a number of different ways. For example, the idle time module 1202 can calculate the vehicle idle time 1204 based on actual values of the vehicle idle instances 1208, which can be derived the map database 510 of FIG. 5. As a further example the vehicle idle time 1204 can be based on estimated or expected values of the vehicle idle instances 1208. For example, the vehicle idle instances 1208 for the stop sign 344 can correspond to an expected one of the vehicle idle time 1204 of three seconds.

The route idle module 524 can include an idle probability module 1210 coupled to the route idle module 524. The idle probability module 1210 is for determining the probability of a vehicle being in an idle state while traveling along a route. The idle probability module 1210 can calculate an idle probability 1212.

The idle probability 1212 is defined as the probability of the vehicle being in the idle state while traveling along the route. The idle probability 1212 can be the probability or likelihood of having one of the vehicle idle instances 1208 at one of the segment transitions 342 between one of the route segments 330 and another one of the route segments 330.

The idle probability module 1210 can determine the idle probability 1212 as "one" when one of the vehicle idle instances 1208 occurs at one of the segment transitions 342 and a value of "zero" when one of the vehicle idle instances 1208 does not occur at one of the segment transitions 342. As an example, the idle probability module 1210 can determine the idle probability 1212 with information as included in an idle probability table 1214. The idle probability table 1214 is defined as a table having the information that correlates the likelihood of having one of the vehicle idle instances 1208 for a given combination of the segment transitions 342. The idle probability table 1214 will be discussed in greater detail below.

The route idle module 524 can include an idle consumption rate module 1216 coupled to the idle probability module 1210. The idle consumption rate module 1216 is for calculating the rate at which a vehicle consumes fuel while at an idle state. The idle consumption rate module 1216 can calculate an idle consumption rate 1218. The idle consumption rate 1218 is defined as the rate at which fuel is consumed while the vehicle is at an idle state.

The idle consumption rate module 1216 can calculate the idle consumption rate 1218 as a product of an idle constant 1220 and a vehicle idle rate 1222. The vehicle idle rate 1222 is defined as a fuel consumption value equivalent to the amount of fuel consumed at a given speed of the vehicle. The vehicle idle rate 1222 can be the vehicle fuel consumption rate 706 of FIG. 7 at a specific speed of the user vehicle 228. As a specific example, the vehicle idle rate 1222 can be equivalent to the vehicle fuel consumption rate 706 at the route segment speed 610 of 20 miles an hour, although it is understood that the vehicle idle rate 1222 can be equivalent to a different value of the vehicle fuel consumption rate 706.

The idle constant 1220 is defined as value to adjust the vehicle idle rate 1222. As an example, the idle constant 1220 can be a value of "0.5" which assumes that the idle consumption rate 1218 is half of the vehicle idle rate 1222. As a specific example, the idle consumption rate 1218 can corresponds to half the vehicle fuel consumption rate 706 at the route segment speed 610 of 20 miles per hour.

The route idle module 524 can include an idle cost sum module 1224 coupled to the route idle module 524. The idle cost sum module 1224 is for calculating the total fuel consumed when the vehicle is in an idle state while traveling along a route. The idle cost sum module 1224 can calculate the route idle fuel cost 526 for each of the candidate routes 208 based on the vehicle idle time 1204, the idle probability 1212 and the idle consumption rate 1218.

The idle cost sum module 1224 can calculate the route idle fuel cost 526 by summing the product of the vehicle idle time 1204 for a given one of the vehicle idle instances 1208, the idle probability 1212, and the idle consumption rate 1218 for each of the vehicle idle instances 1208 along the candidate routes 208, according to an equation 5:

$$C_I = \sum(T_I * P_I * R_I)$$

*Equation 5*

$C_I$ is the route idle fuel cost 526. $T_I$ is the vehicle idle time 1204. $P_I$ is the idle probability 1212. $R_I$ is the idle consumption rate 1218.

The navigation system 100 describes the module functions or order as an example. The modules can be partitioned differently. For example, the idle cost sum module 1224 can be coupled to the idle time module 1202. Each of the modules can operate individually and independently of the other modules.

Furthermore, data generated in one module can be used by another module without being directly coupled to each other. For example, the idle consumption rate module 1216 can receive the vehicle idle time 1204 from the idle time module 1202.

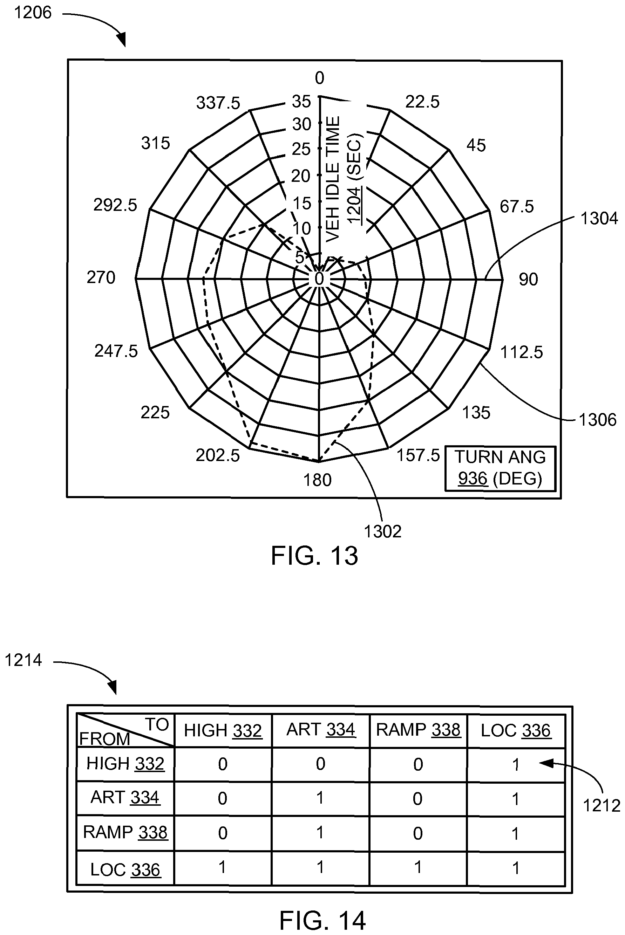

Referring now to FIG. 13, therein is shown an example of the average idle turn chart 1206. The average idle turn chart 1206 can display an idle time curve 1302. The idle time curve 1302 is defined as the relationship between the angle of a turn and the time the vehicle is in an idle state prior to making the turn. The idle time curve 1302 can correlate the vehicle idle time 1204 and the turn angle 936.

The values along a radial axis 1304 of the average idle turn chart 1206 can represent the measure of the vehicle idle time 1204, in seconds, for a given one of the turn angle 936. The values along a circumference 1306 can represent the measure of the turn angle 936.

As a reference example, an angle of zero degrees corresponds to the orientation of the user vehicle 228 prior to the turn. The turn angle 936 can range from 0 degrees to 360 degrees and increasing in a clockwise direction. For example, a right turn can correspond to the turn angle 936 of 90 degrees, a left turn can correspond to the turn angle 936 of 270 degrees, and a u-turn can correspond to the turn angle 936 of 180 degrees.

Referring now to FIG. 14, therein is shown an example of the idle probability table 1214. The idle probability table 1214 can display the idle probability 1212 when traveling from one of the route segments 330 of FIG. 3 to another one of the route segments 330. The rows of the idle probability table 1214 can represent the idle probability 1212 for the particular one of the route segments 330 the user vehicle 228 of FIG. 2 is traveling "from" when entering the segment transitions 342 of FIG. 3. The columns of the idle probability table 1214 can represent the idle probability 1212 for the particular one of the route segments 330 that the user vehicle 228 is traveling "to" when exiting the segment transitions 342.

For example, the idle probability table 1214 can have the idle probability 1212 of one of the vehicle idle instances 1208 when traveling from one of the highway segments 332 to another one of the highway segments 332 as "zero" because it is unlikely for a stop at the highway segments 332. In another example, the idle probability table 1214 can have the idle probability 1212 of one of the vehicle idle instances 1208 when traveling from one of the local segments 336 to another one of the local segments 336 as "one" because it is very likely that the segment transitions 342 will result in one of the vehicle idle instances 1208.

For illustrative purposes, the idle probability table 1214 is shown having the values of the idle probability 1212 for the segment transitions 342 between the highway segments 332, the artery segments 334, the ramp segments 340 and the local segments 336, although it is understood that the idle probability table 1214 can have different values for the idle probability 1212. For example, when traveling from the ramp segments 340 to the highway segments 332, the idle probability table 1214 can have the idle probability 1212 as "one" if the segment transitions 342 includes traffic metering signals that restrict the flow of traffic during rush hour conditions.

Further, the idle probability table 1214 is shown without the idle probability 1212 for the segment transitions 342 between the residential segment 338 of FIG. 3 and the other ones of the route segments 330, although it is understood that the idle probability table 1214 can include the idle probability 1212 for the residential segment 338.

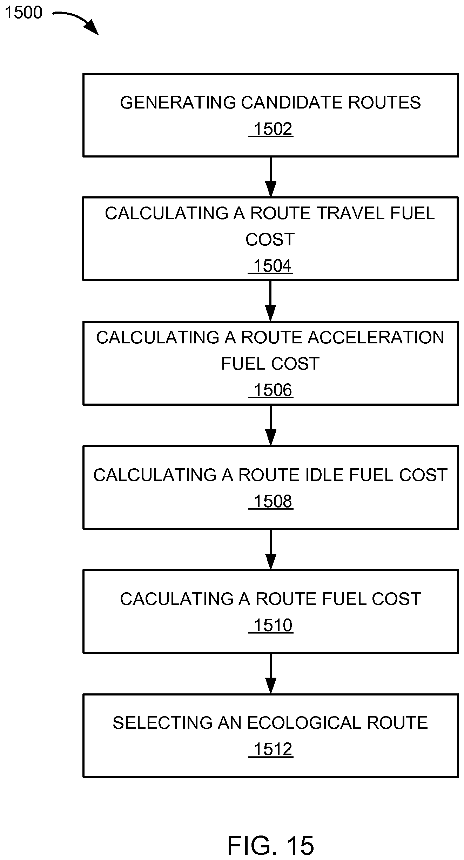

Referring now to FIG. 15, therein is shown a flow chart of a method 1500 of operation of the navigation system in a further embodiment of the present invention. The method 1500 includes: generating candidate routes from a start location to a destination in a block 1502; calculating a route travel fuel cost with a vehicle fuel consumption rate of a vehicle in a block 1504; calculating a route acceleration fuel cost from an acceleration of the vehicle in a block 1506; calculating a route idle fuel cost from a vehicle idle instance of the vehicle in a block 1508; calculating a route fuel cost for the candidate routes with the route travel fuel cost, the route idle fuel cost and the route acceleration fuel cost in a block 1510; and selecting an ecological route from the candidate routes having the lowest value of the route fuel cost for displaying on a device in a block 1512.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization.

Another important aspect of the present invention is that it valuably supports and services the historical trend of reducing costs, simplifying systems, and increasing performance.

These and other valuable aspects of the present invention consequently further the state of the technology to at least the next level.

While the invention has been described in conjunction with a specific best mode, it is to be understood that many alternatives, modifications, and variations will be apparent to those skilled in the art in light of the aforegoing description. Accordingly, it is intended to embrace all such alternatives, modifications, and variations that fall within the scope of the included claims. All matters hithertofore set forth herein or shown in the accompanying drawings are to be interpreted in an illustrative and non-limiting sense.

**Claims**

1. A method (1500) of operation of a navigation system comprising:

   generating candidate routes from a start location to a destination (1502);
   calculating a route travel fuel cost with a vehicle fuel consumption rate of a vehicle (1504);

calculating a route acceleration fuel cost from an acceleration of the vehicle (1506);

calculating a route idle fuel cost from a vehicle idle instance of the vehicle, wherein calculating the route idle fuel cost includes calculating a vehicle idle time based on a turn angle of the vehicle following the vehicle idle instance by utilizing information correlating a time the vehicle is at an idle state with an angle of a turn following the idle state (1508);

calculating a route fuel cost for the candidate routes with the route travel fuel cost, the route idle fuel cost and the route acceleration fuel cost (1510); and

selecting an ecological route from the candidate routes having the lowest value of the route fuel cost for displaying on a device (1512).

2. The method (1500) as claimed in claim 1 wherein calculating the vehicle idle time of the vehicle idle instance includes calculating different values of the vehicle idle time for specific types of the vehicle idle instance.

3. The method (1500) as claimed in claim 1 wherein calculating the route acceleration fuel cost (1506) includes calculating the route acceleration fuel cost based on a stop probability of the candidate routes.

4. The method (1500) as claimed in claim 1 wherein calculating the route acceleration fuel cost (1506) includes calculating the route acceleration fuel cost from a low speed acceleration cost defined as the amount of fuel consumed when the vehicle accelerates from a low speed to a higher speed.

5. A navigation system (100) comprising:

a route generation module (512) for generating candidate routes (208) from a start location (210) to a destination (206);

a route travel cost module (514), coupled to the route generation module (512), for calculating a route travel fuel cost (516) with a vehicle fuel consumption rate of a vehicle;

a route acceleration module (520), coupled to the route generation module (512), for calculating a route acceleration fuel cost (522) from an acceleration of a vehicle;

a route idle module (524), coupled to the route acceleration module (520), for calculating a route idle fuel cost (526) for a vehicle idle instance of the vehicle, wherein the route idle module (524) includes

an idle time module (1202), coupled to the route idle module (524), for calculating a vehicle idle time (1204) of the vehicle idle instance based on a turn angle (936) of the vehicle following the vehicle idle instance by utilizing information correlating a time the vehicle is at an idle state with an angle of a turn following the idle state (1208);

an idle cost sum module (1224), coupled to the route idle module (524), for calculating the route idle fuel cost (526) with the vehicle idle time (1204).

a route efficiency module (528), coupled to the route idle module (524), for calculating a route fuel cost (224) of the candidate routes (208) with the route travel fuel cost (512), the route idle fuel cost (526), and the route acceleration fuel cost (520);

a route selection module (532), coupled to the route efficiency module (528), for selecting an ecological route (226) from the candidate routes (208) having the lowest value of the route fuel cost (224); and

a route display module (534), coupled to the route selection module (532), for displaying the ecological route (226) on a device.

6. The system (100) as claimed in claim 5 wherein the idle time module (1202) is configured to calculate different values of the vehicle idle time for specific types of the vehicle idle instance.

7. The system (100) as claimed in claim 5 wherein the route acceleration module (520) includes:

a stop probability module (920), coupled to the route acceleration module (520), for calculating a stop probability (914) of the candidate routes (208); and

an acceleration cost sum module (942), coupled to the route acceleration module (520), for calculating the route acceleration fuel cost (522) based on the stop probability (914).

8. The system (100) as claimed in claim 5 wherein the route acceleration module (520) includes:

a low speed cost module (930), coupled to the route acceleration module (520), for calculating a low speed acceleration cost (910) defined as the amount of fuel consumed when the vehicle accelerates from a low speed to a higher speed with a pre-acceleration speed (932); and

an acceleration cost sum module (942), coupled to the route acceleration module (520), for calculating the route acceleration fuel cost (522) with the pre-acceleration speed (932).

**Patentansprüche**

1. Verfahren (1500) für den Betrieb eines Navigationssystems, umfassend:

   Erzeugen von Kandidaten-Routen von einem Startort zu einem Zielort (1502);
   Berechnen von Routen-Fahrt-Treibstoffkosten mit einer Fahrzeug-Treibstoffverbrauchsrate eines Fahrzeugs (1504);
   Berechnen von Routen-Beschleunigungs-Treibstoffkosten aus einer Beschleunigung des Fahrzeugs (1506);
   Berechnen von Routen-Stillstands-Treibstoffkosten aus einem Fahrzeug-Stillstands-Ereignis des Fahrzeugs, wobei das Berechnen der Routen-Stillstands-Treibstoffkosten das Berechnen einer Fahrzeug-Stillstands-Zeit umfasst basierend auf einem Kurvenwinkel des Fahrzeugs im Anschluss an das Fahrzeug-Stillstands-Ereignis unter Verwendung von Information, die eine Zeit, die das Fahrzeug in einem Stillstands-Zustand ist, mit einem Winkel einer Kurve im Anschluss an den Stillstands-Zustand verknüpft (1508);
   Berechnen von Routen-Treibstoff-Kosten für die Kandidaten-Routen mit den Routen-Fahrt-Treibstoffkosten, Routen-Stillstands-Treibstoffkosten und den Routen-Beschleunigungs-Treibstoffkosten (1510); und
   Auswählen einer ökologischen Route aus den Kandidaten-Routen zur Anzeige auf einem Gerät (1512), wobei die ökologische Route den geringsten Wert für die Routen-Treibstoff-Kosten aufweist.

2. Verfahren (1500) nach Anspruch 1, wobei das Berechnen der Fahrzeug-Stillstands-Zeit des Fahrzeug-Stillstands-Ereignisses das Berechnen verschiedener Werte für die Fahrzeug-Stillstands-Zeit für bestimmten Arten des Fahrzeug-Stillstands-Ereignisses umfasst

3. Verfahren (1500) nach Anspruch 1, wobei das Berechnen der Routen-Beschleunigungs-Treibstoffkosten (1506) das Berechnen der Routen-Beschleunigungs-Treibstoffkosten basierend auf einer Halte-Wahrscheinlichkeit der Kandidaten-Routen umfasst.

4. Verfahren (1500) nach Anspruch 1, wobei das Berechnen der Routen-Beschleunigungs-Treibstoffkosten (1506) das Berechnen der Routen-Beschleunigungs-Treibstoffkosten aus Beschleunigungs-Kosten bei niedriger Geschwindigkeit umfasst, wobei die Beschleunigungs-Kosten bei niedriger Geschwindigkeit definiert sind als die Treibstoffmenge, die verbraucht wird, wenn das Fahrzeug von einer niedrigen Geschwindigkeit auf eine höhere Geschwindigkeit beschleunigt.

5. Navigationssystem (100), umfassend:

   ein Routen-Erzeugungs-Modul (512) zum Erzeugen von Kandidaten-Routen (208) von einem Startort (210) zu einem Zielort (206);
   ein Routen-Fahrt-Kosten-Modul (514), das mit dem Routen-Erzeugungs-Modul (512) verbunden ist, zum Berechnen von Routen-Fahrt-Treibstoffkosten (516) mit einer Fahrzeug-Treibstoffverbrauchsrate eines Fahrzeugs;
   ein Routen-Beschleunigungs-Modul (520), das mit dem Routen-Erzeugungs-Modul (512) verbunden ist, zum Berechnen von Routen-Beschleunigungs-Treibstoffkosten (522) aus einer Beschleunigung eines Fahrzeugs;
   ein Routen-Stillstands-Modul (524), das mit dem Routen-Beschleunigungs-Modul (520) verbunden ist, zum Berechnen von Routen-Stillstands-Treibstoffkosten (526) für ein Fahrzeug-Stillstands-Ereignis des Fahrzeugs, wobei das Routen-Stillstands-Modul (524) umfasst:

      ein Stillstands-Zeit-Modul (1202), das mit dem Routen-Stillstands-Modul (524) verbunden ist, zum Berechnen einer Fahrzeug-Stillstands-Zeit (1204) des Fahrzeug-Stillstands-Ereignisses basierend auf einem Kurvenwinkel (936) des Fahrzeugs im Anschluss an das Fahrzeug-Stillstands-Ereignis unter Verwendung von Information, die eine Zeit, die das Fahrzeug in einem Stillstands-Zustand ist, mit einem Winkel einer Kurve im Anschluss an den Stillstands-Zustand (1208) verknüpft;
      ein Stillstands-Kosten-Summations-Modul (1224), das mit dem Routen-Stillstands-Modul (524) verbunden ist, zum Berechnen der Routen-Stillstands-Treibstoffkosten (526) mit der Fahrzeug-Stillstands-Zeit (1204),

   ein Routen-Effizienz-Modul (528), das mit dem Routen-Stillstands-Modul (524) verbunden ist, zum Berechnen von Routen-Treibstoff-Kosten (224) der Kandidaten-Routen (208) mit den Routen-Fahrt-Treibstoff-Kosten (512), den Routen-Stillstands-Treibstoff-Kosten (526) und den Routen-Beschleunigungs-Treibstoff-Kosten (520);
   ein Routen-Auswahl-Modul (532), das mit dem Routen-Effizienz-Modul (528) verbunden ist, zum Auswählen einer ökologischen Route (226) aus den Kandidaten-Routen (208), wobei die ökologische Route (226) den geringsten Wert für die Routen-Treibstoff-Kosten (224) aufweist;

und

ein Routen-Anzeige-Modul (534), das mit dem Routen-Auswahl-Modul (532) verbunden ist, zum Anzeigen der ökologischen Route (226) auf einem Gerät.

**6.** Navigationssystem (100) nach Anspruch 5, wobei das Stillstands-Zeit-Modul (1202) dazu eingerichtet ist, verschiedene Werte für die Fahrzeug-Stillstands-Zeit für bestimmte Arten des Fahrzeug-Stillstands-Ereignisses zu berechnen.

**7.** Navigationssystem (100) nach Anspruch 5, wobei das Routen-Beschleunigungs-Modul (520) umfasst:

ein Halte-Wahrscheinlichkeits-Modul (920), das mit dem Routen-Beschleunigungs-Modul (520) verbunden ist, zum Berechnen einer Halte-Wahrscheinlichkeit (914) der Kandidaten-Routen (208); und

ein Beschleunigungs-Kosten-Summations-Modul (942), das mit dem Routen-Beschleunigungs-Modul (520) verbunden ist, zum Berechnen der Routen-Beschleunigungs-Treibstoff-Kosten (522) basierend auf der Halte-Wahrscheinlichkeit (914).

**8.** Navigationssystem (100) nach Anspruch 5, wobei das Routen-Beschleunigungs-Modul (520) umfasst:

ein Niedrige-Geschwindigkeit-Kosten-Modul (930), das mit dem Routen-Beschleunigungs-Modul (520) verbunden ist, zum Berechnen von Beschleunigungs-Kosten bei niedriger Geschwindigkeit (910) mit einer Geschwindigkeit vor Beschleunigung (932), wobei die Beschleunigungs-Kosten bei niedriger Geschwindigkeit (910) definiert sind als die Treibstoffmenge, die verbraucht wird, wenn das Fahrzeug von einer niedrigen Geschwindigkeit auf eine höhere Geschwindigkeit beschleunigt; und

ein Beschleunigungs-Kosten-Summations-Modul (942), das mit dem Routen-Beschleunigungs-Modul (520) verbunden ist, zum Berechnen der Routen-Beschleunigungs-Treibstoff-Kosten (522) mit der Geschwindigkeit vor Beschleunigung (932).

**Revendications**

**1.** Procédé (1500) de fonctionnement d'un système de navigation comprenant les étapes ci-dessous consistant à :

générer des itinéraires candidats depuis un emplacement de départ jusqu'à une destination (1502) ;

calculer un coût en carburant de déplacement sur un itinéraire avec un taux de consommation de carburant de véhicule d'un véhicule (1504) ;

calculer un coût en carburant d'accélération sur l'itinéraire à partir d'une accélération du véhicule (1506) ;

calculer un coût en carburant de ralenti sur l'itinéraire à partir d'une instance de ralenti de véhicule du véhicule, dans lequel

l'étape de calcul du coût en carburant de ralenti sur l'itinéraire consiste à calculer un temps de ralenti de véhicule sur la base d'un angle de braquage du véhicule suivant l'instance de ralenti de véhicule en utilisant des informations corrélant un temps où le véhicule est dans un état de ralenti avec un angle de braquage suivant l'état de ralenti (1508) ;

calculer un coût en carburant sur l'itinéraire pour les itinéraires candidats avec le coût en carburant de déplacement sur l'itinéraire, le coût en carburant de ralenti sur l'itinéraire et le coût en carburant d'accélération sur l'itinéraire (1510) ; et

sélectionner un itinéraire écologique parmi les itinéraires candidats présentant la valeur la plus faible du coût en carburant sur l'itinéraire, à des fins d'affichage sur un dispositif (1512).

**2.** Procédé (1500) selon la revendication 1, dans lequel l'étape de calcul du temps de ralenti de véhicule de l'instance de ralenti de véhicule consiste à calculer différentes valeurs du temps de ralenti de véhicule pour des types spécifiques de l'instance de ralenti de véhicule.

**3.** Procédé (1500) selon la revendication 1, dans lequel l'étape de calcul du coût en carburant d'accélération sur l'itinéraire (1506) consiste à calculer le coût en carburant d'accélération sur l'itinéraire sur la base d'une probabilité d'interruption des itinéraires candidats.

**4.** Procédé (1500) selon la revendication 1, dans lequel l'étape de calcul du coût en carburant d'accélération sur l'itinéraire (1506) consiste à calculer le coût en carburant d'accélération sur l'itinéraire à partir d'un coût d'accélération à vitesse faible défini comme la quantité de carburant consommée lorsque le véhicule accélère d'une vitesse faible à une vitesse supérieure.

**5.** Système de navigation (100) comprenant :

un module de génération d'itinéraires (512) destiné à générer des itinéraires candidats (208), depuis un emplacement de départ (210) jusqu'à une destination (206) ;

un module de coût de déplacement sur l'itinéraire (514), couplé au module de génération d'itinéraires (512), destiné à calculer un coût en carburant de déplacement sur l'itinéraire (516) avec un taux de consommation de carburant de véhicule d'un véhicule ;

un module d'accélération sur l'itinéraire (520), couplé au module de génération d'itinéraires (512), destiné à calculer un coût en carburant d'accélération sur l'itinéraire (522) à partir d'une accélération d'un véhicule ;

un module de ralenti sur l'itinéraire (524), couplé au module d'accélération sur l'itinéraire (520), destiné à calculer un coût en carburant de ralenti sur l'itinéraire (526) pour une instance de ralenti de véhicule du véhicule, dans lequel le module de ralenti sur l'itinéraire (524) inclut :

un module de temps de ralenti (1202), couplé au module de ralenti sur l'itinéraire (524), destiné à calculer un temps de ralenti de véhicule (1204) de l'instance de ralenti de véhicule sur la base d'un angle de braquage (936) du véhicule suivant l'instance de ralenti de véhicule, en utilisant des informations corrélant un temps où le véhicule est dans un état de ralenti avec un angle d'un braquage suivant l'état de ralenti (1208) ;

un module de somme de coûts de ralenti (1224), couplé au module de ralenti sur l'itinéraire (524), destiné à calculer le coût en carburant de ralenti sur l'itinéraire (526) avec le temps de ralenti de véhicule (1204) ;

un module d'efficacité d'itinéraires (528), couplé au module de ralenti sur l'itinéraire (524), destiné à calculer un coût en carburant sur l'itinéraire (224) des itinéraires candidats (208) avec le coût en carburant sur l'itinéraire (512), le coût en carburant de ralenti sur l'itinéraire (526), et le coût en carburant d'accélération sur l'itinéraire (520) ;

un module de sélection d'itinéraire (532), couplé au module d'efficacité d'itinéraires (528), destiné à sélectionner un itinéraire écologique (226) parmi les itinéraires candidats (208) présentant la valeur la plus faible du coût en carburant sur l'itinéraire (224) ; et

un module d'affichage d'itinéraire (534), couplé au module de sélection d'itinéraire (532), destiné à afficher l'itinéraire écologique (226) sur un dispositif.

6. Système (100) selon la revendication 5 dans lequel : le module de temps de ralenti (1202) est configuré de manière à calculer différentes valeurs du temps de ralenti de véhicule pour des types spécifiques de l'instance de ralenti de véhicule.

7. Système (100) selon la revendication 5, dans lequel le module d'accélération sur l'itinéraire (520) comprend :

un module de probabilité d'interruption (920), couplé au module d'accélération sur l'itinéraire (520), destiné à calculer une probabilité d'interruption (914) des itinéraires candidats (208) ; et

un module de somme de coûts d'accélération (942), couplé au module d'accélération sur l'itinéraire (520), destiné à calculer le coût en carburant d'accélération sur l'itinéraire (522) sur la base de la probabilité d'interruption (914).

8. Système (100) selon la revendication 5, dans lequel le module d'accélération sur l'itinéraire (520) inclut :

un module de coût à vitesse faible (930), couplé au module d'accélération sur l'itinéraire (520), destiné à calculer un coût d'accélération à vitesse faible (910) défini comme la quantité de carburant consommée lorsque le véhicule accélère d'une vitesse faible à une vitesse supérieure avec une vitesse de pré-accélération (932) ; et

un module de somme de coûts d'accélération (942), couplé au module d'accélération sur l'itinéraire (520), destiné à calculer le coût en carburant d'accélération sur l'itinéraire (522) avec la vitesse de pré-accélération (932).

100

102

104

106

FIG. 1

FIG. 2

FIG. 3

FIG. 4

EP 2 593 750 B1

100

| REQ REC MOD 502 |
| DEST EXTR MOD 504 |
| DEST ADDR 506 |

| REQ 204 |
| DEST 206 |

MAP DB 510

| RTE GEN MOD 512 |
| CAND RTE 208 |
| RTE TRV TIME 222 |
| RTE DIST 220 |

| RTE TRV COST MOD 514 |
| RTE TRV FUEL COST 516 |

| RTE ACC MOD 520 |
| RTE ACC FUEL COST 522 |

| RTE IDLE MOD 524 |
| RTE IDLE FUEL COST 526 |

| RTE EFF MOD 528 |
| RTE FUEL EFF 530 |
| RTE FUEL COST 224 |

| RTE SELECT MOD 532 |
| ECO RTE 226 |

RTE DISP MOD 534

FIG. 5

512

SEG DIST MOD 602
RTE SEG LENG 604

RTE DIST MOD 606
RTE DIST 220

RTE SEG SPD MOD 608
RTE SEG SPD 610

RTE TRAV TIME MOD 612
RTE TRAV TIME 222

FIG. 6

514

RTE SEG COST MOD 702
RTE SEG FUEL COST 704

VEH CONS RATE MOD 708
VEH CONS RATE 706
CONS RATE ADJ MOD 712

CONS RATE CHART 710

VEH PROP 714

SEG COST SUM MOD 716
RTE FUEL COST 224

FIG. 7

FIG. 8

FIG. 9

922 —

| SPD (MPH) | RES 338 | LOC 336 | RAMP 340 | ART 334 | HIGH 332 |
|---|---|---|---|---|---|
| 0 | 1 | 0.9 | 0.05 | 0.02 | 0 |
| 5 | 1 | 0.9 | 0.05 | 0.02 | 0 |
| 10 | 1 | 0.9 | 0.05 | 0.02 | 0 |
| 15 | 1 | 0.9 | 0.05 | 0.02 | 0 |
| 20 | 1 | 0.9 | 0.05 | 0.02 | 0 |
| 25 | 1 | 0.3 | 0.05 | 0.02 | 0 |
| 30 | 1 | 0.3 | 0.05 | 0.02 | 0 |
| 35 | 1 | 0.1 | 0.05 | 0.02 | 0 |
| 40 | 1 | 0.1 | 0.05 | 0.02 | 0 |
| 45 | 1 | 0.1 | 0.05 | 0.02 | 0 |
| 50 | 1 | 0.1 | 0.05 | 0.02 | 0 |
| 55 | 1 | 0.1 | 0.05 | 0.02 | 0 |
| 60 | 1 | 0.1 | 0.05 | 0.02 | 0 |
| 65 | 1 | 0.1 | 0.05 | 0.02 | 0 |
| 70 | 1 | 0.1 | 0.05 | 0.02 | 0 |
| 75 | 1 | 0.1 | 0.05 | 0.02 | 0 |

914

## FIG. 10

940 —

| TURN ANG 936 | TURN SPD 938 |
|---|---|
| 0-60 | RTE SEG SPD |
| 60-120 | 20 MPH |
| 120-270 | 0 MPH |
| 270-300 | 20 MPH |
| 300-360 | RTE SEG SPD |

610

## FIG. 11

524

VEH IDLE INST 1208

IDLE TIME MOD 1202
VEH IDLE TIME 1204

AVG IDLE TURN CHART 1206

IDLE PROB MOD 1210
IDLE PROB 1212

IDLE PROB TABLE 1214

IDLE CONSM RATE MOD 1216
VEH IDLE RATE 1222
IDLE CONST 1220
IDLE CONSM RATE 1218

IDLE COST SUM MOD 1224
RTE IDLE FUEL COST 526

FIG. 12

FIG. 13

| TO FROM | HIGH 332 | ART 334 | RAMP 338 | LOC 336 |
|---|---|---|---|---|
| HIGH 332 | 0 | 0 | 0 | 1 |
| ART 334 | 0 | 1 | 0 | 1 |
| RAMP 338 | 0 | 1 | 0 | 1 |
| LOC 336 | 1 | 1 | 1 | 1 |

FIG. 14

1500

```
┌─────────────────────────────────────┐
│     GENERATING CANDIDATE ROUTES     │
│                1502                 │
└─────────────────────────────────────┘
                  │
                  ▼
┌─────────────────────────────────────┐
│    CALCULATING A ROUTE TRAVEL FUEL   │
│                COST                 │
│                1504                 │
└─────────────────────────────────────┘
                  │
                  ▼
┌─────────────────────────────────────┐
│   CALCULATING A ROUTE ACCELERATION   │
│              FUEL COST              │
│                1506                 │
└─────────────────────────────────────┘
                  │
                  ▼
┌─────────────────────────────────────┐
│   CALCULATING A ROUTE IDLE FUEL COST │
│                1508                 │
└─────────────────────────────────────┘
                  │
                  ▼
┌─────────────────────────────────────┐
│     CACULATING A ROUTE FUEL COST     │
│                1510                 │
└─────────────────────────────────────┘
                  │
                  ▼
┌─────────────────────────────────────┐
│     SELECTING AN ECOLOGICAL ROUTE    │
│                1512                 │
└─────────────────────────────────────┘
```

FIG. 15

**EP 2 593 750 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61364010 A
- US 5742922 A
- DE 102007059120 A1
- DE 102008002695 A1